# EUROPEAN PATENT APPLICATION

(11) **EP 4 819 298 A1**
(43) Date of publication of application: **07.10.2026**
(21) Application number: 25732668.6
(22) Date of filing: 23.01.2025
(51) Int. Cl.: H01M 10/613, H01M 10/647, H01M 10/6555, H01M 10/6557, H01M 10/6567, H01M 50/211, H01M 50/264

(54) **BATTERY DEVICE AND ELECTRIC DEVICE**

(71) Applicant: Contemporary Amperex Technology (Hong Kong) Limited, Central, Hong Kong (HK)
(72) Inventor: WANG, Yalei, Ningde, Fujian 352100 (CN); CHEN, Juntao, Ningde, Fujian 352100 (CN); ZHOU, Huiping, Ningde, Fujian 352100 (CN)
(74) Representative: Gong, Jinping
(86) International application number: PCT/CN2025/074328
(87) International publication number: WO 2026/156598

(57) **Abstract**

A battery apparatus and an electric apparatus are provided and pertain to the field of battery technologies. The battery apparatus includes a cell array and a box; where the cell array is adhesively disposed within the box, and the cell array includes a plurality of pouch cells stacked along a thickness direction; and a reinforcing partition is provided between large surfaces of at least two adjacent pouch cells in the cell array, the reinforcing partition is connected to the box, stiffness of the reinforcing partition is greater than stiffness of a pouch shell of the pouch cell, and the reinforcing partition exchanges heat with the pouch cells.

## Description

### TECHNICAL FIELD

This application relates to the field of battery technologies, and in particular, to a battery apparatus and an electric apparatus.

### BACKGROUND

In recent years, there has been a leap in the development of new energy vehicles. In the field of electric vehicles, traction batteries serve as an irreplaceable and crucial power source. Among these traction batteries, some use pouch cells. However, due to the tendency of pouch cells to deform easily and their poor heat dissipation performance, the further improvement of reliability of power batteries is inhibited.

### SUMMARY

Embodiments of this application provide a battery apparatus and an electric apparatus, which helps improve the reliability of pouch cells.

According to a first aspect, an embodiment of this application provides a battery apparatus. The battery apparatus includes a cell array and a box; where the cell array is adhesively disposed within the box, and the cell array includes a plurality of pouch cells stacked along a thickness direction; and a reinforcing partition is provided between large surfaces of at least two adjacent pouch cells in the cell array, the reinforcing partition is connected to the box, stiffness of the reinforcing partition is greater than stiffness of a pouch shell of the pouch cell, and the reinforcing partition exchanges heat with the pouch cells.

In the foregoing technical solution, the box is adhesively connected to the cell array, which simplifies the connection between the box and the cell array and improves the production efficiency of the battery apparatus, and can also eliminate the need for introducing parts, reduce costs, simplify the connection process, and reduce the space occupied in the box, thus facilitating the increase in the energy density of the battery apparatus. Connecting the reinforcing partition to the box can fix the reinforcing partition, so that the reinforcing partition can effectively support the pouch cells, and the stiffness of the cell array is increased, thus enhancing the overall stiffness of the battery apparatus. Additionally, with such heat exchange between the reinforcing partition and the pouch cell and such connection between the reinforcing partition and the box, a heat transfer path can also be formed at the connection between the reinforcing partition and the box to enable the pouch cell to transfer heat to the box through the reinforcing partition efficiently, thereby enhancing the heat dissipation efficiency of the pouch cell.

In some embodiments, the battery apparatus includes the box for loading the cell array, an edge of the reinforcing partition has a connecting portion protruding from the pouch cell, and the connecting portion is configured to form a connection with the box.

In the foregoing technical solution, the reinforcing partition is connected to the box, which can realize the reliable connection between the cell array and the box and improve the connection reliability between the cell array and the box. When the area of a side surface of the pouch cell facing the box is relatively small, it is difficult to achieve reliable connection between the pouch cell and the box, so the reinforcing partition is used to connect to the box, which can enhance the reliability of the connection between the cell array and the box, and ensure stable and reliable operation of the pouch cell.

In some embodiments, the box includes a box body and a mounting bracket, where the mounting bracket is installed within the box body, and the connecting portion is connected to the mounting bracket.

In the foregoing technical solution, the mounting bracket is installed within the box body, and the reinforcing partition is connected to the box through the mounting bracket, which can reduce the difficulty of connection between the reinforcing partition and the box, and achieve flexible installation of the reinforcing partition and the box. Moreover, the shape, position, and material of the mounting bracket can also be flexibly designed to further reduce the difficulty of connection between the mounting bracket and the reinforcing partition, improve the connection reliability between them, and enhance the reliability and stability of the mounting bracket in securing the cell array.

In some embodiments, the pouch cells in the cell array are arranged along the thickness direction of the pouch cell, a width direction of the pouch cell is a vertical direction, a length direction of the pouch cell is a horizontal direction, and the mounting bracket is disposed on one side of the pouch cell along the length direction of the pouch cell.

In the foregoing technical solution, both the cell array and the mounting bracket can reduce the space occupied in vertical direction, which helps to enhance the structural compactness of the battery apparatus in the vertical direction. The size of the battery apparatus in the vertical direction is reduced, which is advantageous for arranging the battery apparatus in vertically constrained space (for example, under a car). Moreover, there is no vertical stacking relationship among the pouch cells in the cell array, which enhances the consistency of all pouch cells in the cell array. Furthermore, the position of the mounting bracket is conducive to the connection with each reinforcing partition in the cell array, thereby improving the reliability and stability of the mounting bracket in securing the cell array.

In some embodiments, an upper end of the mounting bracket is lower than an upper end of the pouch cell so as to form an upper clearance space above the mounting bracket, and the connecting portion is connected to the mounting bracket at a position below the upper clearance space.

In the foregoing technical solution, the upper clearance space is reserved above the mounting bracket, and thus the upper clearance space can be used to arrange other components of the battery apparatus. For example, circuits may be arranged. This enables full utilization of the space above the mounting bracket, reduces spaces occupied in other regions, and improves the compactness and energy density of the battery apparatus.

In some embodiments, the connecting portion is connected to an upper portion of the mounting bracket, and a lower end of the connecting portion is higher than a lower end of the mounting bracket so as to form a lower clearance space below the connecting portion; and the pouch cell has a conductive element electrically connected to an electrode assembly of the pouch cell, where at least part of the conductive element is exposed outside the pouch shell and located in the lower clearance space.

In the foregoing technical solution, by configuring the connecting portion with a relatively small size in the vertical direction and positioning it towards the top relative to the mounting bracket, the lower clearance space is formed below the connecting portion. Thus, the lower clearance space can be used to accommodate the conductive element of the pouch cell. This arrangement enables the space below the connecting portion to be fully used, reduces the space occupied in other regions, and improves the compactness and energy density of the battery apparatus.

In some embodiments, one mounting bracket is connected to at least two connecting portions.

In the foregoing technical solution, by connecting one mounting bracket to at least two connecting portions, the quantity of mounting brackets used can be reduced to some extent, decreasing the number of parts and improving assembly efficiency.

In some embodiments, the mounting bracket includes a plurality of sidewalls spaced apart from each other along an arrangement direction of the pouch cells in the cell array, where each sidewall corresponds to one connecting portion, and the connecting portion is connected to the sidewall.

In the foregoing technical solution, the mounting bracket can reduce the space occupied while being connected to the connecting portion, and the material cost of the mounting bracket can be minimized, achieving lightweight.

In some embodiments, the mounting bracket is provided in plurality, the plurality of mounting brackets are arranged along an arrangement direction of the pouch cells in the cell array, each mounting bracket includes two sidewalls and a connecting wall connecting the two sidewalls, and adjacent sidewalls of two adjacent mounting brackets together clamp the same connecting portion.

In the foregoing technical solution, the difficulty of processing a single mounting bracket can be reduced, facilitating a flexible connection between the pouch cell and the mounting bracket.

In some embodiments, one of the length direction and width direction of the box is a first direction, the other is a second direction, a height direction of the box is a third direction, the pouch cells in the cell array are arranged along the first direction, the first direction is the thickness direction of the pouch cell, the second direction is the length direction of the pouch cell, the third direction is the width direction of the pouch cell, and the mounting bracket is provided at each of two ends of the box in the second direction.

In the foregoing technical solution, the arrangement position of the mounting bracket is conducive to the connection with the various reinforcing partitions, does not easily cause an increase in the size of the box in the height direction, and helps to maintain a smaller height of the box.

In some embodiments, a plurality of mounting brackets arranged along the first direction are provided at each end of the box in the second direction.

In the foregoing technical solution, providing the plurality of mounting brackets facilitates flexible connection with the plurality of reinforcing partitions, thus reducing the difficulty of connection between the reinforcing partitions and the mounting brackets.

In some embodiments, the box is provided with a battery module, where the battery module includes two cell arrays arranged along the second direction, all the pouch cells in each cell array are stacked in sequence along the thickness direction of the pouch cell, and ends of the two cell arrays in the same battery module that are far away from each other in the second direction are respectively connected to the mounting brackets on the corresponding sides.

In the foregoing technical solution, the length of a single pouch cell can be reduced to decrease the difficulty of processing a single pouch cell.

In some embodiments, a length direction of the reinforcing partition extends along the second direction, two ends of the reinforcing partition in the length direction of the reinforcing partition respectively extend to two ends of the battery module in the second direction, so that the two cell arrays in the battery module share the reinforcing partition, and the two ends of the reinforcing partition in the length direction of the reinforcing partition are respectively connected to the mounting brackets at the two ends of the box in the second direction.

In the foregoing technical solution, the length of the reinforcing partition is relatively long, which can reduce the number of reinforcing partitions, and improve the overall stability of the battery module. Moreover, it is not necessary to provide the mounting bracket between the two cell arrays in the battery module, which can reduce the number of mounting brackets used, improve assembly efficiency, and lower production costs.

In some embodiments, the battery apparatus includes the box for loading the cell array, the box includes cover plates disposed on two sides of the cell array along the height direction of the box, the cover plates on the two sides being a top plate and a bottom plate, and the battery apparatus further includes a heat exchange plate, the heat exchange plate being disposed between the cell array and the cover plate and configured to exchange heat with the cell array.

In the foregoing technical solution, the heat exchange plate can easily exchange heat with a plurality of pouch cells, allowing the cell array to achieve a good heat-exchange performance, which enables the cell array to work stably and reliably, thereby making the battery apparatus work more stably.

In some embodiments, the width direction of the pouch cell is consistent with the height direction of the box, and a surface of the pouch shell along the width direction of the pouch cell facing the heat exchange plate is a flat surface and connected to the heat exchange plate through a heat-conducting medium.

In the foregoing technical solution, by designing the surface of the pouch shell facing the heat exchange plate as a flat surface, the pouch shell can have a stable mating surface with the heat exchange plate, allowing the pouch shell to be fixed to the heat exchange plate more stably and reliably through a heat-conducting adhesive or a heat-conducting pad. This in turn makes the assembly and fixation of the pouch cell on the heat exchange plate more convenient and stable and the cell array fixed to the heat exchange plate more reliably, which can further enhance the heat exchange reliability.

In some embodiments, the battery apparatus includes the box for loading the cell array, the box includes cover plates disposed on two sides of the cell array along the height direction of the box, the cover plates on the two sides being a top plate and a bottom plate, and the box further includes a heat exchange plate, the heat exchange plate being disposed between the cell array and the bottom plate and configured to exchange heat with the cell array, and the mounting bracket being disposed on a top of the heat exchange plate.

In the foregoing technical solution, the mounting bracket is disposed on top of the heat exchange plate, so that the mounting bracket can exchange heat with the heat exchange plate, which avoids heat from concentrating on the mounting bracket, thereby helping to improve the overall heat dissipation effect of the battery apparatus.

In some embodiments, a thickness of the reinforcing partition is less than a thickness of the pouch cell.

In the foregoing technical solution, by configuring the thickness of the reinforcing partition to be less than the thickness of the pouch cell, the space occupied by the reinforcing partition within the box can be reduced, which helps to increase the energy density of the battery apparatus.

In some embodiments, the thickness of the reinforcing partition is 0.8 mm to 2.0 mm.

In the foregoing technical solution, by configuring the thickness of the reinforcing partition to be 0.8 mm to 2.0 mm, the reinforcing partition is not too small and can have good supporting strength to stably and reliably support the pouch cell. Moreover, the thickness of the reinforced partition is not too large, thereby reducing the space occupied by the reinforced partition. To be specific, the reinforcing partition can reduce the space occupied while meeting the support requirements, which helps to increase the energy density of the battery apparatus.

In some embodiments, the reinforcing partition is a metal plate.

In the foregoing technical solution, by processing the reinforcing partition with a metal material, the reinforcing partition can possess sufficient support capability even with a relatively small thickness, and can also have good thermal conductivity, which is conducive to the reinforcing partition to reliably support the pouch cells and conducting rapid heat exchange.

In some embodiments, the reinforcing partition is an aluminum plate, an aluminum alloy plate, a copper plate, or a steel plate.

In the foregoing technical solution, when the reinforcing partition is an aluminum plate, an aluminum alloy plate, a copper plate, or a steel plate, the material selected for the reinforcing partition is cost-effective and readily available, and can have excellent supporting strength and heat exchange performance even at smaller thicknesses.

In some embodiments, the reinforcing partition is a solid structure.

In the foregoing technical solution, by configuring the reinforcing partition as a solid structure, that is, in the form of a solid plate, the reinforcing partition can have excellent strength, improving the reliability of support for the pouch cell, and enabling the pouch cell to receive more stable and reliable support. This is more conducive to addressing the issue of forces transmitted between adjacent pouch cells and reducing the squeezing between adjacent pouch cells.

In some embodiments, the reinforcing partition has a cavity formed inside.

In the foregoing technical solution, by configuring the cavity inside the reinforcing partition, the reinforcing partition can use the cavity to absorb the expansion force of the pouch cells, in other words, the reinforcing partition provides an expansion space, which prevents excessive squeezing on the pouch cells when the pouch cells expand too much, thus enhancing the reliability of the cell array. Furthermore, when the cell array encounters some collisions, the cavity can be used to absorb the impact force to protect the pouch cells.

In some embodiments, the cavity includes a heat exchange flow channel for accommodating a heat exchange medium.

In the foregoing technical solution, the reinforcing partition can exchange heat with the pouch cells through the heat exchange medium in the heat exchange flow channel, so the thermal management performance of the reinforcing partition for the pouch cells can be optimized through the selection and control of the heat exchange medium. Additionally, the heat exchange flow channel can be connected to an external thermal management system, allowing the heat exchange medium to circulate and have its temperature regulated. In this way, the reinforcing partition can integrate a liquid cooling heat exchange function, which reduces additional heat exchange structures, thereby simplifying the battery apparatus, reducing the number of parts, and increasing the energy density of the battery apparatus.

In some embodiments, the heat exchange flow channel penetrates from one end of the reinforcing partition to the other end in a length direction of the reinforcing partition.

In the foregoing technical solution, by configuring the heat exchange flow channel to penetrate from one end of the reinforcing partition to the other end in the length direction of the reinforcing partition, the heat exchange performance of the reinforcing partition with the pouch cells along the entire length direction can be enhanced.

In some embodiments, a reinforcing rib is provided inside the cavity.

In the foregoing technical solution, by installing the reinforcing rib within the cavity, the reinforcing partition can have the cavity while possessing good supporting strength, which enhances the reliability of the reinforcing partition to support the pouch cells, can ensure the support reliability of the reinforcing partition while reducing the weight and material costs of the reinforcing partition, and achieves lightweight and cost-effective battery apparatus.

In some embodiments, the length direction of the reinforcing partition extends along the length direction of the pouch cell, where a length of the reinforcing partition is greater than 80% of a length of the pouch cells; and/or a width of the reinforcing partition is greater than 80% of a width of the pouch cell.

In the foregoing technical solution, the reinforcing partition can cover the pouch cells to a larger extent, which enhances support and heat exchange effects on the pouch cells.

In some embodiments, a plurality of adjacent cell arrays arranged along the length direction of the pouch cell share the reinforcing partition.

In the foregoing technical solution, arranging the plurality of cell arrays along the length direction of the pouch cell helps to increase the energy density of the battery apparatus. In addition, compared to the solution of using a single longer pouch cell, in this embodiment, the length of a single pouch cell can be reduced, thereby reducing the difficulty of processing a single pouch cell. Moreover, by sharing the reinforcing partition, the number of reinforcing partitions arranged can be reduced, enhancing the stability of the overall structure.

In some embodiments, the length of the reinforcing partition is greater than twice the length of the pouch cell, so that two adjacent cell arrays arranged along the length direction of the pouch cell share the reinforcing partition.

In the foregoing technical solution, by configuring the length of the reinforcing partition to be greater than twice the length of the pouch cells, two adjacent cell arrays arranged along the length direction of the pouch cell share the reinforcing partition, and the reinforcing partition can simultaneously support two pouch cells arranged adjacent to each other along the length direction of the pouch cell, and provide sufficient support and heat exchange for each pouch cell along the length direction of the pouch cell.

In some embodiments, the width of the reinforcing partition is less than the width of the pouch cell.

In the foregoing technical solution, by configuring the width of the reinforcing partition to be less than the width of the pouch cell, the reinforcing partition is not likely to extend beyond the pouch cell along the width direction, which prevents the occupation of space of the pouch cell along the width direction of the pouch cell, and helps to arrange other components of the battery apparatus on the width side of the pouch cell.

In some embodiments, the reinforcing partition is adhesively connected to the pouch cell.

In the foregoing technical solution, the reinforcing partition is adhesively connected to the adjacent pouch cell, which makes the connection simple and the fixation reliable, and the reinforcing partition can stably exchange heat with the pouch cell. Furthermore, the adhesive layer occupies a smaller space, enabling the reinforcing partition and pouch cells to be arranged compactly, which in turn makes the overall structure of the cell array more compact and stable, thereby helping to increase the energy density of the battery.

In some embodiments, the reinforcing partition is adhesively fixed to the pouch cell through double-sided adhesive.

In the foregoing technical solution, the reinforcing partition is adhesively fixed to the adjacent pouch cell using double-sided adhesive, which can prevent the problem of adhesive overflow, avoid the space occupied by overflow adhesive, and eliminate the need for subsequent cleaning of the overflowed adhesive.

In some embodiments, the cell array includes a plurality of reinforcing partitions arranged along the thickness direction of the pouch cell, and two reinforcing partitions arranged adjacent to each other along the thickness direction of the pouch cell and respectively disposed on two sides of at least one pouch cell along the thickness direction of the pouch cell are connected through a connecting plate located in a peripheral region of the pouch cell.

In the foregoing technical solution, by configuring the connecting plate, the reliability of support for the pouch cells by the reinforcing partition is enhanced, and the position of the connecting plate configured does not interfere with the pouch cells.

In some embodiments, the connecting plate is disposed between the two reinforcing partitions the connecting plate connects and integrally connected with the two reinforcing partitions into a U-shaped shell.

In the foregoing technical solution, the step of connecting the connecting plate with the reinforcing partition can be omitted, improving the connection reliability between the connecting plate and the reinforcing partition.

In some embodiments, the reinforcing partition is sandwiched between every two adjacent pouch cells in the cell array.

In the foregoing technical solution, by sandwiching the reinforcing partition between every two adjacent pouch cells in the cell array, each pouch cell can receive support and undergo heat exchange from the reinforcing partition, thus more effectively optimizing the reliability and performance of the cell array.

In some embodiments, a plurality of pouch cells are sandwiched between two adjacent reinforcing partitions in the cell array.

In the foregoing technical solution, by sandwiching the plurality of pouch cells are sandwiched between two adjacent reinforcing partitions, with no reinforcing partition configured, the number of reinforcing partitions can be reduced and the cost of the reinforcing partitions used can be lowered.

In some embodiments, the number of pouch cells sandwiched between two adjacent reinforcing partitions in the cell array is less than or equal to four.

In the foregoing technical solution, when the plurality of pouch cells are sandwiched between two adjacent reinforcing partitions in the cell array, the number of pouch cells between the two adjacent reinforcing partitions is configured to be less than or equal to four, so that the number of pouch cells between the two adjacent reinforcing partitions is more appropriate, avoiding the problem that the number of pouch cells between two reinforcing partitions is too many and exceeds the support capacity of the reinforcing partitions, and ensuring that each pouch cell between the two reinforcing partitions can receive reliable support from the two reinforcing partitions.

In some embodiments, a buffer element is sandwiched between at least two adjacent pouch cells in the cell array, stiffness of the buffer element being less than stiffness of the pouch shell.

In the foregoing technical solution, by configuring the buffer element between two adjacent pouch cells and having the stiffness of the buffer element less than that of the pouch shell, the buffer element can provide expansion space for the pouch cells, allowing the buffer element to absorb the expansion deformation of the pouch cells and vibrations from external impacts well, thereby improving the overall structural stability of the cell array.

In some embodiments, both the buffer element and the reinforcing partition are disposed between at least two adjacent pouch cells in the cell array.

In the foregoing technical solution, when both the buffer element and the reinforcing partition are disposed between two adjacent pouch cells, the cooperation between the reinforcing partition and the buffer element allows two adjacent pouch cells to be effectively separated, which can play both a buffering role and a supporting role, thereby enhancing the reliability of the cell array.

In some embodiments, the buffer element is sandwiched between two adjacent reinforcing partitions to form a partition group, the partition group being disposed between two adjacent pouch cells.

In the foregoing technical solution, this arrangement is conducive to both heat dissipation and buffering.

In some embodiments, at most one of the buffer element and the reinforcing partition is disposed between any two adjacent pouch cells in the cell array.

In the foregoing technical solution, by configuring at most one of the buffer element and the reinforcing partition between any two adjacent pouch cells in the cell array, the spacing between the two adjacent pouch cells can be reduced, the compactness of fitting between adjacent pouch cells, and the energy density of the battery apparatus can be increased. Additionally, there is no need to consider the issue of fitting between the reinforcing partition and the buffer element, thereby simplifying assembly.

In some embodiments, at least one pouch cell in the cell array is sandwiched between the buffer element and the reinforcing partition.

In the foregoing technical solution, the pouch cell sandwiched between the buffer element and the reinforcing partition can be supported by and undergone heat with the reinforcing partition on one side, and can also be buffered by the buffer element on the other side, thereby improving the reliability and performance of the pouch cell.

In some embodiments, the buffer elements and the reinforcing partitions in the cell array are alternately arranged.

In the foregoing technical solution, the buffer element or the reinforcing partition is arranged between two adjacent pouch cells in the cell array, with the buffer elements and the reinforcing partitions alternately arranged, which makes the arrangement of the buffer elements and the reinforcing partitions in the cell array more balanced, ensuring that each pouch cell in the cell array receives stable and reliable support, undergoes heat exchange, and achieves a buffering effect.

In some embodiments, the buffer element covers more than 80% of an area of a side surface of the pouch cell along the thickness direction of the pouch cell; and/or the buffer element is a foam layer or a silicone layer.

In the foregoing technical solution, by configuring the buffer element to cover more than 80% of the area of the side surface of the pouch cell along the thickness direction of the pouch cell, the pouch cell and the buffer element can form a large buffering mating area, thus improving the buffering effect of the buffer element on the pouch cell, enabling the pouch cell to obtain buffering protection in a larger range, and enhancing the reliability of the pouch cell. By using a foam layer or a silicone layer as the buffer element, the buffer element has better absorption capacity and has low weight and cost, which is conducive to the lightweight and cost-effective design of the battery apparatus.

In some embodiments, a buffer element is disposed at each of two ends of the cell array along the thickness direction of the pouch cell, stiffness of the buffer element is less than stiffness of the pouch shell, and all the pouch cells in the cell array are sandwiched between the buffer elements at the two ends.

In the foregoing technical solution, this arrangement is conducive to both heat dissipation and buffering, and can reduce space occupation, thereby helping to increase the energy density of the battery apparatus.

In some embodiments, the pouch cell includes a conductive element, where the conductive element is electrically connected to the electrode assembly of the pouch cell, and at least part of the conductive element is exposed outside the pouch shell; and two adjacent pouch cells in the cell array are connected through the conductive element.

In the foregoing technical solution, two adjacent pouch cells are connected through the conductive element, which can simplify the connection of a plurality of pouch cells in the cell array, and facilitates the realization of electrical connections among the pouch cells in the battery apparatus.

In some embodiments, the two conductive elements forming the connection are lap jointed, and at least one conductive element is in a bent shape.

In the foregoing technical solution, the two conductive elements forming the connection are lap jointed, so that the two conductive elements have a larger connection area, and the two connection conductive elements have more stable and reliable connection. In addition, at least one conductive element is in a bent shape, so that the two pouch cells connected through the conductive elements can be stacked along the thickness direction. Moreover, this type of connection can simplify the structure, reduce parts, and improve assembly efficiency.

In some embodiments, the two conductive elements forming the connection are connected through a transition piece, and the transition piece is in a bent shape.

In the foregoing technical solution, adjacent pouch cells in the cell array are connected through a transition piece, and the transition piece is configured to be in a bent shape. This configuration can simplify the design of the conductive element, shorten the length of the conductive element, and reduce the processing steps and processes of the conductive element during the connection of the pouch cells, thereby increasing production efficiency. Moreover, the two pouch cells connected through the conductive element can be stacked along the thickness direction. In addition, standardized transition pieces can be used for fast and efficient connection processing, making the connection of the plurality of pouch cells more convenient and efficient, thereby increasing the production efficiency of the cell array.

In some embodiments, the conductive element is provided at each of two ends of the pouch cell along the length direction of the pouch cell, and the conductive elements at adjacent ends of two adjacent pouch cells along the length direction of the pouch cell are connected.

In the foregoing technical solution, by configuring the conductive element at each of two ends of the pouch cell along the length direction of the pouch cell, and connecting the conductive elements at adjacent ends of two adjacent pouch cells along the length direction of the pouch cell, the space occupied by the pouch cell along the width direction of the pouch cell can be reduced. When the width direction is vertical, this configuration helps to reduce the space occupied in the vertical direction, reduce the size of the battery apparatus in the vertical direction, and increase the energy density of the battery apparatus in the vertical direction.

In some embodiments, the two conductive elements the at two ends of the pouch cell along the length direction of the pouch cell have opposite polarities, and the two conductive elements forming the connection have the same or opposite polarities.

In the foregoing technical solution, series connection and/or parallel connection can be realized according to need, so that the battery apparatus can be flexibly arranged.

In some embodiments, the cell array includes at least three pouch cells, and in two conductive elements of two adjacent pouch cells in the cell array that are respectively located between the two adjacent pouch cells, one conductive element is connected to the conductive element on the corresponding side of one adjacent pouch cell, and the other conductive element is connected to the conductive element on the corresponding side of another adjacent pouch cell.

In the foregoing technical solution, a plurality of pouch cells can be arranged in a row first along the length direction of the pouch cell, every two adjacent conductive elements are connected, and then the joint of the conductive elements is bended, so that the plurality of pouch cells can be arranged in a row along the thickness direction, thereby simplifying processing and improving production efficiency.

In some embodiments, the battery apparatus includes the box for loading the cell array, the box is provided with a battery module, and the battery module includes two cell arrays arranged along the length direction of the pouch cell, where all the pouch cells in each cell array are stacked in sequence along the thickness direction of the pouch cell; and the conductive elements of the two cell arrays in the same battery module on sides of the two cell arrays close to each other along the length direction of the pouch cell are connected.

In the foregoing technical solution, a plurality of cell arrays can be connected in series and/or in parallel, which facilitates the simplification of the electrical connection within the entire battery apparatus.

In some embodiments, the battery apparatus includes the box for loading the cell array, an edge of the reinforcing partition has a connecting portion protruding from the pouch cell along the length direction of the pouch cell, and the connecting portion is configured to form a connection with the box and spaced apart from the conductive element along the width direction of the pouch cell.

In the foregoing technical solution, space can be fully utilized, compactness can be improved, and space occupied by the pouch cells along the width direction can be reduced. When the width direction is vertical, this configuration helps to reduce the space occupied in the vertical direction, reduce the size of the battery apparatus in the vertical direction, and increase the energy density of the battery apparatus in the vertical direction.

In some embodiments, the pouch shell includes two membrane portions arranged and connected along the thickness direction of the pouch cell, where the two membrane portions each define an accommodating groove, the accommodating grooves of the two membrane portions open towards each other along the thickness direction of the pouch cell and together form an accommodating cavity of the pouch shell, and the electrode assembly of the pouch cell is disposed in the accommodating cavity.

In the foregoing technical solution, the structure of the pouch shell is simple and easy to process, which facilitates an increase in the volume of the pouch shell, thereby increasing the energy density of the pouch cell.

In some embodiments, a wall thickness of the membrane portion is less than or equal to 0.2 mm, a size of the pouch cell along the thickness direction of the pouch cell is a first size, a size of the membrane portion along the thickness direction of the pouch cell is a second size, a ratio of the second size to the first size is greater than or equal to 0.4 and less than or equal to 0.6, and the first size is greater than or equal to 5 mm and less than or equal to 70 mm.

In the foregoing technical solution, the pouch shell in the pouch cell has relatively small volume and lighter mass, which enables the electrode assembly in the pouch cell to account for a larger proportion in terms of volume and mass. As a result, the energy density of the pouch cell can be significantly increased. Moreover, the pouch cell can have a relatively large thickness and a higher energy density. Under the same volume condition, compared to a plurality of pouch cells with thinner thicknesses, the number of pouch cells arranged in this embodiment is smaller. Therefore, the proportion of the pouch shell can be reduced, and consequently, a plurality of pouch cells within the same volume can have a higher energy density. Furthermore, the number of structural components such as reinforcing partitions and buffer elements in the battery apparatus can be reduced, the space of pouch cells arranged in the battery apparatus can be increased. Thus, the overall energy density of the battery apparatus is significantly increased.

In some embodiments, the two membrane portions are separate elements and each have edge sealing structures on all around of the pouch cell.

In the foregoing technical solution, this configuration of a single membrane portion is convenient for processing and can reduce processing difficulty.

In some embodiments, the two membrane portions are integrated elements and each have edge sealing structures on one long side and two short sides of the pouch cell.

In the foregoing technical solution, this configuration can reduce the number of edge sealing times and can also reduce the entire size of the pouch cells along the width direction, thereby increasing the energy density. Moreover, compared with the edge sealing on all sides, omitting the edge-sealing on one side can avoid the leakage caused by poor edge-sealing, enhancing the reliability of the pouch cell.

In some embodiments, the battery apparatus includes the box for loading the cell array, the box includes a top plate and a bottom plate that are disposed on two sides of the cell array along a height direction of the box, the width direction of the pouch cell is consistent with the height direction of the box, and structural adhesive is filled between the cell array and the bottom plate.

In the foregoing technical solution, this configuration can enhance the stiffness of the pouch cell along the height direction of the box.

In some embodiments, the structural adhesive is a heat-conducting adhesive.

In the foregoing technical solution, this configuration facilitates the heat dissipation of the pouch cell.

In some embodiments, the box is provided with a glue blocking strip, the bottom plate is located below the cell array, a fitting gap is formed between bottoms of two adjacent pouch cells arranged along the thickness direction of the pouch cell, and the glue blocking strip is located between the fitting gap and the bottom plate.

In the foregoing technical solution, the provided glue blocking strip can prevent the structural adhesive from overflowing into the space between adjacent pouch cells, reducing the probability of a hard structure being formed between adjacent pouch cells due to adhesive overflow. As a result, this configuration can alleviate the problem of local stress concentration between adjacent pouch cells and decrease the risk of damage to the pouch cells.

In some embodiments, two adjacent pouch cells share one glue blocking strip.

In the foregoing technical solution, by having two adjacent pouch cells share one glue blocking strip, the number of glue blocking strips to be arranged can be reduced, which is conducive to improving assembly efficiency.

In some embodiments, the glue blocking strip is a glue blocking foam, and the glue blocking strip is adhesively bonded to the bottom plate; or the glue blocking strip is an adhesive strip with adhesive on one side, the glue blocking strip is adhesively bonded to a bottom of the pouch cell.

In the foregoing technical solution, the glue blocking foam has good compressibility. When the pouch cells squeeze the glue blocking strip, the glue blocking foam can better prevent the structural adhesive from overflowing between adjacent pouch cells. Additionally, the glue blocking strip is adhesively bonded to the bottom plate, which facilitates the installation and fixation of the glue blocking strip; or the glue blocking strip is configured as an adhesive strip with adhesive on one side, which is convenient to adhesively bond the glue blocking strip to the bottom of the pouch cell, enabling the glue blocking strip and the pouch cell to be fixed as a whole. Thus, this configuration helps to improve the overall assembly efficiency of the battery apparatus.

In some embodiments, the reinforcing partition is in an inverted T-shaped or L-shaped structure and includes a first part located between adjacent pouch cells and a second part located below the pouch cells, the second part being located between a bottom of the pouch cells and the bottom plate.

In the foregoing technical solution, the second part may be wrapped in structural adhesive, so that the bottom of the pouch cells, the second part, and the bottom plate are fixed through the structural adhesive. In this way, the connection and heat transfer area between the reinforcing partition and the box can be increased, and the yield of rigid support can be improved. Moreover, when the reinforcing partition is in an inverted T-shaped structure, the second part can be separated between the bottoms of adjacent pouch cells to form a fitting gap with the bottom plate, preventing the structural adhesive from overflowing between adjacent pouch cells. This reduces the probability of a local hard structure being formed between the adjacent pouch cells due to adhesive overflow, thereby alleviating the problem of local stress concentration between adjacent pouch cells and decreasing the risk of damage to the pouch cells.

In some embodiments, the pouch cell is any one of a lithium iron phosphate battery cell, a ternary battery cell, and a solid-state battery cell.

In the foregoing technical solution, using the above-mentioned types of pouch cells can provide more options for the design of the battery apparatus to meet different usage requirements. The pouch cell being a lithium iron phosphate battery cell has advantages of high reliability, long cycle life, light weight, large capacity, and low internal resistance. The pouch cell being a ternary battery cell has advantages of high energy density and good electrochemical performance. The pouch cell being a solid-state battery cell has advantages of high energy density, high reliability, light weight, and good performance in high and low temperatures.

In some embodiments, the pouch cell is a lithium iron phosphate battery cell, and in a positive electrode material of the pouch cell, a ratio of a positive electrode active material, a binder, and a conductive agent is 96:(1-3):(1-3); or the pouch cell is a ternary battery cell, and in a positive electrode material of the pouch cell, a ratio of a positive electrode active material, a binder, and a conductive agent is 96:(2-3):(1-2).

In the foregoing technical solution, when the pouch cell is a lithium iron phosphate battery cell, a high proportion of the positive electrode active material means that more substances capable of undergoing an electrochemical reaction can be accommodated within a limited electrode assembly. This is conducive to increasing the capacity and energy density of the battery apparatus, enabling the lithium iron phosphate battery cell to output a higher amount of electricity when its volume and weight are relatively small, and meeting the application scenarios with certain requirements for energy density. Using the above-mentioned ranges for the amounts of the binder and the conductive agent can reduce the cost of auxiliary materials, thereby reducing the overall cost of the battery apparatus. When the pouch cell is a ternary battery cell, due to the relatively complex structure and surface properties of the ternary material itself, using the positive electrode active material, binder, and conductive agent in the above-mentioned dosage ratios is conducive to ensuring good adhesion between the positive electrode active material particles and between the active material and the current collector. This improves the mechanical stability and integrity of the electrode assembly, and helps to reduce the risk of active material shedding and electrode pulverization during charge and discharge, and prolong the cycle life of the battery apparatus.

According to a second aspect, an embodiment of this application further provides an electric apparatus including the battery apparatus according to any one of the foregoing solutions.

In the foregoing technical solution, since the performance of the battery apparatus is improved, it is conducive to enhancing the operational power consumption performance of the electric apparatus.

### BRIEF DESCRIPTION OF DRAWINGS

To describe the technical solutions of the embodiments of this application more clearly, the following briefly describes the accompanying drawings required for describing the embodiments. It is appreciated that the accompanying drawings below show merely some embodiments of this application and thus should not be considered as limitations on the scope. Persons of ordinary skill in the art may still derive other related drawings from the accompanying drawings without creative efforts.
FIG. 1 is a schematic structural diagram of a vehicle according to some embodiments of this application;
FIG. 2 is a schematic structural diagram of a battery apparatus according to some embodiments of this application;
FIG. 3 is a schematic diagram of a battery apparatus with a cover plate of a box hidden according to some embodiments of this application;
FIG. 4 is a schematic diagram of a plurality of cell arrays in a battery apparatus according to some embodiments of this application;
FIG. 5 is a schematic diagram of a cell array in a battery apparatus according to some embodiments of this application;
FIG. 6 is an enlarged view of section A circled in FIG. 5;
FIG. 7 is an enlarged view of section B framed in FIG. 3;
FIG. 8 is a cross-sectional view of a reinforcing partition according to some embodiments of this application;
FIG. 9 is a schematic diagram of fitting between a pouch cell and a reinforcing partition according to some embodiments of this application;
FIG. 10 is a schematic diagram of a plurality of cell arrays according to some embodiments of this application;
FIG. 11 is a partial schematic diagram of a cell array according to some embodiments of this application;
FIG. 12 is a partial schematic diagram of a cell array according to some other embodiments of this application;
FIG. 13 is a schematic diagram of connection between a cell array and a mounting bracket according to some embodiments of this application;
FIG. 14 is an enlarged view of section C framed in FIG. 13;
FIG. 15 is an enlarged view of section F framed in FIG. 4;
FIG. 16 is a schematic diagram of a battery apparatus according to some embodiments of this application;
FIG. 17 is a cross-sectional view along line E-E in FIG. 16;
FIG. 18 is an enlarged view of section D framed in FIG. 17;
FIG. 19 is a schematic diagram of a cell array according to some embodiments of this application;
FIG. 20 is a status diagram of two pouch cells in the cell array of FIG. 19 before folding;
FIG. 21 is a schematic diagram of a pouch cell according to some embodiments of this application;
FIG. 22 is a partial enlarged view of a pouch cell according to some embodiments of this application;
FIG. 23 is a partial enlarged view of an orthographic projection of the pouch cell shown in FIG. 21;
FIG. 24 is a partial schematic diagram of a battery apparatus according to an embodiment of this application;
FIG. 25 is a partial schematic diagram of another battery apparatus according to an embodiment of this application; and
FIG. 26 is a partial schematic diagram of yet another battery apparatus according to an embodiment of this application.

### Reference signs:

vehicle 1000;
battery apparatus 100; controller 200; motor 300;
cell array 10; first direction F1; second direction F2; third direction F3;
battery module 101; upper clearance space S1; lower clearance space S2;
pouch cell 1; pouch shell 11; membrane portion 111; edge sealing structure 112;
conductive element 12; transition piece 13;
reinforcing partition 2; cavity 21; heat exchange flow channel 211; reinforcing rib 22; connecting portion 23;
first part 24; second part 25;
buffer element 3; glue blocking strip 6; connecting plate 6;
box 20;
box body 7; cover plate 71; bottom plate 711; top plate 712;
mounting bracket 8; sidewall 81; connecting wall 82; and
heat exchange plate 9.

### DESCRIPTION OF EMBODIMENTS

To make the objectives, technical solutions, and advantages of the embodiments of this application clearer, the following clearly describes the technical solutions in the embodiments of this application with reference to the accompanying drawings in the embodiments of this application. Apparently, the described embodiments are some but not all of the embodiments of this application. All other embodiments obtained by persons of ordinary skill in the art based on the embodiments of this application without creative efforts shall fall within the protection scope of this application.

Unless otherwise defined, all technical and scientific terms used in this application shall have the same meanings as commonly understood by persons skilled in the art to which this application relates. The terms used in the specification of this application are intended to merely describe the specific embodiments rather than to limit this application. The terms "include", "comprise", and any variations thereof in the specification, claims, and brief description of drawings of this application are intended to cover non-exclusive inclusions. In the specification, claims, or accompanying drawings of this application, the terms "first", "second", and the like are intended to distinguish between different objects rather than to describe a particular order or a primary-secondary relationship.

Reference to "embodiment" in this application means that specific features, structures, or characteristics described with reference to the embodiment may be included in at least one embodiment of this application. The word "embodiment" appearing in various places in this specification does not necessarily refer to the same embodiment or an independent or alternative embodiment that is exclusive of other embodiments.

In the descriptions of this application, it should be further noted that unless otherwise specified and defined explicitly, the terms "installment", "link", "connection", and "attachment" should be understood in their general senses. For example, the terms may be a direct connection or may be an indirect connection through an intermediate medium. Persons of ordinary skill in the art can understand specific meanings of these terms in this application as appropriate to specific situations.

The term "and/or" in this application is only an associative relationship for describing associated objects, indicating that three relationships may be present. For example, A and/or B may indicate the following three cases: presence of only A; presence of both A and B; and presence of only B. In addition, the character "/" in this application generally indicates an "or" relationship between the contextually associated objects.

In the embodiments of this application, the same reference signs denote the same components. For brevity, in different embodiments, detailed descriptions of the same components are not repeated. It should be understood that as shown in the accompanying drawings, sizes such as thickness, length, and width of various components and sizes such as thickness, length, and width of integrated devices in the embodiments of this application are merely for illustrative purposes and should not constitute any limitations on this application.

The term "a plurality of" used in this application refers to more than two, including two.

Currently, from a perspective of the market development, application of traction batteries is being more extensive. Traction batteries have been not only used in energy storage power supply systems such as hydroelectric power plants, thermal power plants, wind power plants, and solar power plants, but also widely used in many other fields including electric transportation tools such as electric bicycles, electric motorcycles, and electric vehicles, military equipment, and aerospace. With the continuous expansion of application fields of traction batteries, market demands for traction batteries are also increasing.

In traction batteries currently in use, some traction batteries adopt pouch cells. A pouch cell includes a pouch shell and an electrode assembly disposed within the pouch shell. The pouch shell is typically made of aluminum-plastic film, softer than hard shells (such as steel shells or aluminum shells). When the pouch cell expands during charge and discharge, or when the pouch cell is subjected to an external mechanical force such as compression and collision, the pouch cell is prone to deformation and damage, which affects the reliability of the pouch cell. Furthermore, during operation, the pouch cell generates heat. Due to its tight encapsulation structure and relatively soft shell, it has relatively poor heat dissipation performance. Under the condition of high-rate charge and discharge or continuous operation, heat tends to accumulate inside the pouch cell. It is difficult for the pouch cell to effectively and promptly dissipate the heat, resulting in excessively high temperatures that accelerate the chemical reactions inside the pouch cell, leading to performance degradation of the pouch cell, and shortening the lifespan of the pouch cell.

In addition, for traction batteries in the related art, a plurality of pouch cells are directly stacked into a box of the traction battery. However, adjacent pouch cells are in direct contact, and both force and heat are directly transmitted between the adjacent pouch cells. Thus, the deformation and heating of a single pouch cell affect adjacent pouch cells. For example, the expansion of one pouch cell compresses and deforms adjacent pouch cells. For another example, the abnormal heating of one pouch cell causes an increase in temperature of adjacent pouch cells. As a result, an amplified impact is formed from a single point to the whole.

In view of this, this application proposes a battery apparatus using a pouch cell. The pouch cell includes a pouch shell and an electrode assembly disposed within the pouch shell. A thickness direction of the pouch cell is a first direction, and a plurality of pouch cells are arranged along the first direction to form a cell array. A reinforcing partition is sandwiched between at least two adjacent pouch cells in the cell array. Stiffness of the reinforcing partition is greater than that of the pouch shell, and the reinforcing partition is configured to exchange heat with corresponding electrode assemblies through contact with the pouch shell.

In this way, configuring the reinforcing partition between adjacent pouch cells helps to support the pouch cells and reduce the damage caused by deformation, thereby improving the reliability of the pouch cells. In addition, the reinforcing partition can also absorb heat from the pouch cells, which is beneficial to the heat dissipation of the pouch cells, thereby improving the performance and extending the lifespan of the pouch cells. Furthermore, the reinforcing partition can separate adjacent pouch cells, avoiding direct contact, thereby addressing the adverse impact of an abnormal condition of one pouch cell on another, which is conducive to enhancing the overall reliability of the battery apparatus.

The technical solution described in the embodiments of this application is applicable to the battery apparatus containing pouch cells, and the electric apparatus using the battery apparatus.

The electric apparatus may be a vehicle, a mobile phone, a portable device, a notebook computer, a ship, a spacecraft, an electric toy, an electric tool, or the like. The vehicle may be a fossil fuel vehicle, a natural gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, for example, a game console, an electric toy car, an electric toy ship, and an electric toy airplane. The electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, and an electric planer. The embodiments of this application impose no special limitation on the foregoing electric apparatus.

For ease of description, the electric apparatus being a vehicle is used as example for description of the following embodiments.

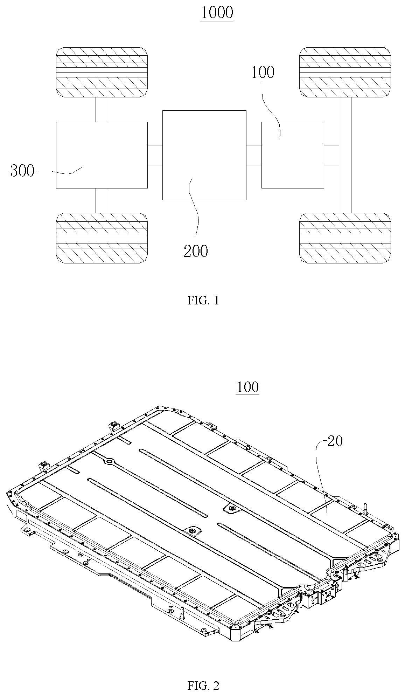

Referring to FIG. 1, FIG. 1 is a schematic structural diagram of a vehicle 1000 according to some embodiments of this application. The vehicle 1000 is provided with a battery apparatus 100, where the battery apparatus 100 may be disposed at the bottom, front, or rear of the vehicle 1000. The battery apparatus 100 may be configured to supply power to the vehicle 1000. For example, the battery apparatus 100 may be used as an operational power source for the vehicle 1000.

The vehicle 1000 may further include a controller 200 and a motor 300, where the controller 200 is configured to control the battery apparatus 100 to supply power to the motor 300, for example, to satisfy power needs of start, navigation, and driving of the vehicle 1000. In some embodiments of this application, the battery apparatus 100 can be used as not only the operational power supply for the vehicle 1000 but also a driving power supply for the vehicle 1000, replacing all or part of the fossil fuel or the natural gas to provide driving power for the vehicle 1000.

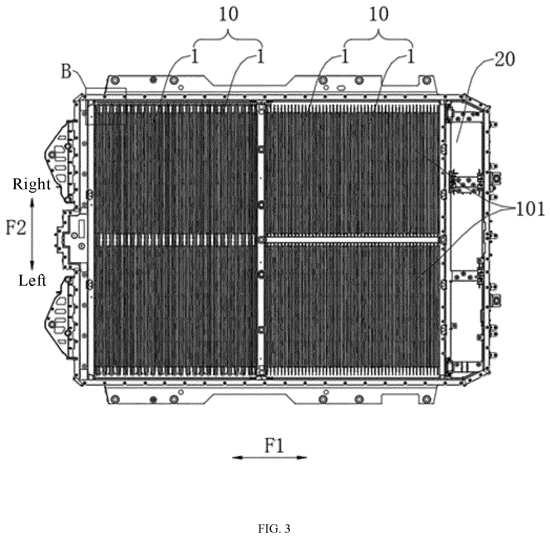

Referring to FIG. 2 and FIG. 3, FIG. 2 is a schematic structural diagram of a battery apparatus 100 according to some embodiments of this application, and FIG. 3 is a schematic diagram of a battery apparatus 100 with a cover plate 71 of a box 20 hidden according to some embodiments of this application. As shown in FIG. 2 and FIG. 3, the battery apparatus 100 may include a box 20 and a pouch cell 1 disposed within the box 20. The pouch cell 1 is provided in plurality, and the plurality of pouch cells 1 may be connected in series, in parallel, or in series-parallel. The series-parallel connection means that the plurality of pouch cells 1 are connected in both series and parallel. The plurality of pouch cells 1 may be directly connected in series, in parallel, or in series-parallel, and then an entirety of the plurality of pouch cells 1 is accommodated in the box 20; or certainly, the plurality of pouch cells 1 may be connected in series, in parallel, or in series-parallel first to form a battery module, and then a plurality of battery modules are connected in series, in parallel, or in series-parallel to form an entirety which is accommodated in the box 20.

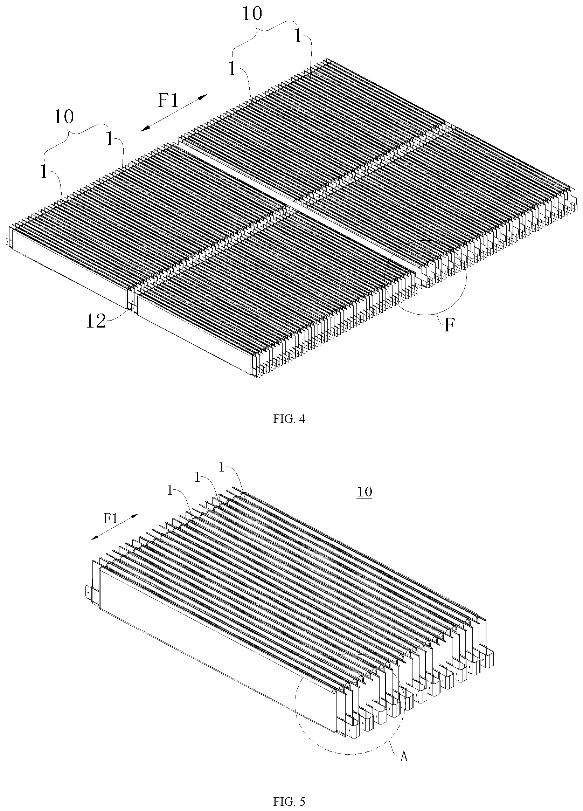

Still referring to FIG. 2 and FIG. 3, and in combination with FIG. 4 and FIG. 5, FIG. 4 is a schematic diagram of a plurality of cell arrays 10 in a battery apparatus 100 according to some embodiments of this application, and FIG. 5 is a schematic diagram of a cell array 10 in a battery apparatus 100 according to some embodiments of this application. The battery apparatus 100 includes the cell array 10 and the box 20. The cell array 10 is adhesively disposed within the box 20, and the cell array 10 includes a plurality of pouch cells 1 stacked along a thickness direction.

Herein, "the cell array 10 is adhesively disposed within the box 20" means that the cell array 10 is disposed inside the box 20, and the cell array 10 is adhesively connected to the box 20 through, for example, structural adhesive or double-sided adhesive.

Herein, "the cell array 10 includes a plurality of pouch cells 1 stacked along a thickness direction" means that at least some of the pouch cells 1 in the cell array 10 are stacked along the thickness direction of the pouch cell 1. For example, all the pouch cells 1 in the cell array 10 may be disposed stacked along the thickness direction of the pouch cell 1. For another example, some pouch cells 1 in the cell array 10 may be disposed stacked along the thickness direction of the pouch cell 1.

For example, the cell array 10 may include at least one cell column, and each cell column includes a plurality of pouch cells 1 arranged stacked along the thickness direction of the pouch cell 1.

For example, the cell array 10 may include a plurality of cell groups, where the plurality of cell groups are stacked along the thickness direction of the pouch cell 1, and each cell group includes one pouch cell or a plurality of pouch cells 1 laid out perpendicular to the thickness direction of the pouch cell 1 (for example, along the length direction or the width direction of the pouch cell 1).

Thus, the box 20 is adhesively connected to the cell array 10, which simplifies the connection between the box 20 and the cell array 10 and improves the production efficiency of the battery apparatus 100, and can also eliminate the need for introducing parts, reduce costs, simplify the connection process, and reduce the space occupied in the box 20, thus facilitating the increase in the energy density of the battery apparatus 100.

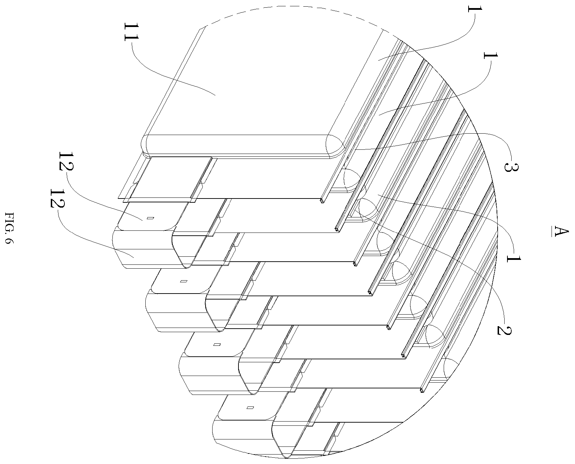

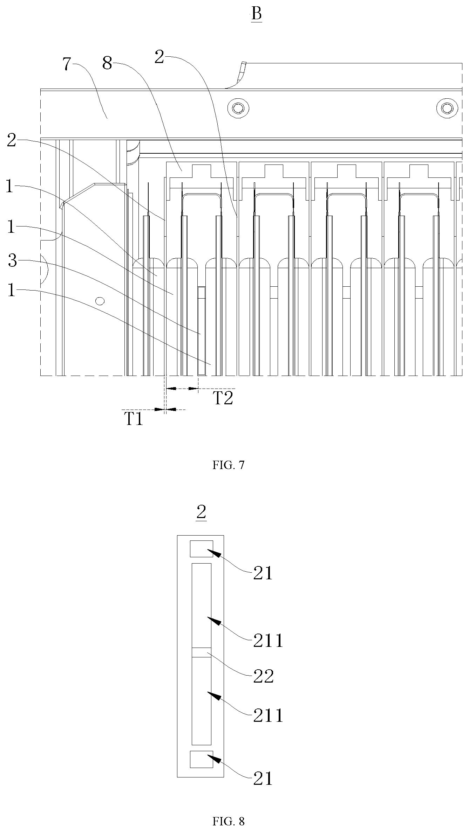

Still referring to FIG. 5, and in combination with FIG. 6 and FIG. 7; FIG. 6 is an enlarged view of section A circled in FIG. 5; and FIG. 7 is an enlarged view of section B framed in FIG. 3. A reinforcing partition 2 is provided between large surfaces of at least two adjacent pouch cells 1 in the cell array 10, the reinforcing partition 2 is connected to the box 20, stiffness of the reinforcing partition 2 being greater than stiffness of the pouch shell 11 of the pouch cell 1, and the reinforcing partition2 exchanges heat with the pouch cell 1.

"The large surface of the pouch cell 1" refers to two side surfaces of the pouch cell 1 along the thickness direction of the pouch cell 1 (for example, the first direction F1 as shown in the figure). "Two pouch cells 1 are stacked along the thickness direction of the pouch cell 1" means that the thickness directions of the two pouch cells 1 are consistent and the two pouch cells 1 are arranged along the thickness direction, so that the two pouch cells 1 are disposed in a large-surface-to-large-surface manner.

The reinforcing partition 2 is provided between the large surfaces of at least two adjacent pouch cells 1 in the cell array 10, which may mean that the reinforcing partition 2 is sandwiched between large surfaces of every two adjacent pouch cells 1, or may mean that the reinforcing partition 2 is sandwiched between large surfaces of some adjacent pouch cells 1, with no reinforcing partition 2 sandwiched between large surfaces of the remaining adjacent pouch cells 1.

It can be understood that a shell of the pouch cell 1 is the pouch shell 11, the pouch cell 1 includes the pouch shell 11 and an electrode assembly disposed within the pouch shell 11. The electrode assembly may include a positive electrode plate and a negative electrode plate. The material of the pouch shell 11 is not limited, for example, may be an aluminum-plastic film. "The reinforcing partition 2 exchanges heat with the pouch cell 1" means that the reinforcing partition 2 is configured to be capable of exchanging heat with the electrode assembly within the pouch cell 1 through the pouch shell 11 the reinforcing partition 2 is in contact with. To be specific, the reinforcing partition 2 can exchange heat with whichever electrode assembly is inside the pouch shell 11 it is in contact with. It can be understood that the intermediate medium for heat transfer between the reinforcing partition 2 and the electrode assembly includes but is not limited to the pouch shell 11, for example, may be the pouch shell 11 and an electrolytic solution (solid or liquid form).

Thus, with the characteristic that the stiffness of the reinforcing partition 2 is greater than the stiffness of the pouch shell 11, the reinforcing partition 2 can alleviate deformation of the pouch cell 1, and enhance the reliability of the pouch cell 1. Moreover, with the heat-transfer capability of the reinforcing partition 2, the reinforcing partition 2 can also play a role of heat dissipation and temperature equalization for the pouch cell 1, optimize the performance of the pouch cell 1, and extend the lifespan of the pouch cell 1. Furthermore, by separating the adjacent pouch cells 1 with the reinforcing partition 2, the mutual influence between the adjacent pouch cells 1 on the two sides of the reinforcing partition 2, for example, force or thermal influences, can be reduced, thereby enhancing the overall reliability of the battery apparatus 100.

The connecting method and position of "the reinforcing partition 2 being connected to the box 20" are not limited. For example, the connection method may be direct or indirect connection, a detachable connection, or a non-detachable fixed connection. The connection position may be located on at least one of the top, side, or bottom of the box 20.

Thus, connecting the reinforcing partition 2 to the box 20 can fix the reinforcing partition 2, so that the reinforcing partition 2 can effectively support the pouch cells 1, and the stiffness of the cell array 10 is increased, thus enhancing the overall stiffness of the battery apparatus 100. Additionally, with such heat exchange between the reinforcing partition 2 and the pouch cell 1 and such connection between the reinforcing partition 2 and the box 20, a heat transfer path can also be formed at the connection between the reinforcing partition 2 and the box 20 to enable the pouch cell 1 to transfer heat to the box 20 through the reinforcing partition 2 efficiently, thereby enhancing the heat dissipation efficiency of the pouch cell 1.

In some embodiments, referring to FIG. 7, a thickness T1 of the reinforcing partition 2 is less than a thickness T2 of the pouch cell 1.

In the foregoing technical solution, by configuring the thickness of the reinforcing partition 2 to be less than the thickness of the pouch cell 1, the space occupied by the reinforcing partition 2 within the box 20 can be reduced, which helps to increase the energy density of the battery apparatus 100.

For example, the thickness of the reinforcing partition 2 is 0.8 mm to 2.0 mm. For example, the thickness of the reinforcing partition 2 may be 0.8 mm, 0.9 mm, 1 mm, 1.3 mm, 1.5 mm, or 2 mm.

In the foregoing technical solution, by configuring the thickness of the reinforcing partition 2 to be 0.8 mm to 2.0 mm, the reinforcing partition 2 is not too small and can have good supporting strength to stably and reliably support the pouch cell 1. Moreover, the thickness of the reinforced partition 2 is not too large, thereby reducing the space occupied by the reinforced partition 2. To be specific, the reinforcing partition 2 can reduce the space occupied while meeting the support requirements, which helps to increase the energy density of the battery apparatus 100.

It is noteworthy that the material of the reinforcing partition 2 is not limited. For example, the reinforcing partition 2 may be a metal plate processed from a metal material. Thus, by processing the reinforcing partition 2 with a metal material, the reinforcing partition 2 can possess sufficient support capability even with a relatively small thickness, and can also have good thermal conductivity, which is conducive to the reinforcing partition 2 to reliably support the pouch cells 1 and conducting rapid heat exchange.

For example, when the reinforcing partition 2 is a metal plate, the reinforcing partition 2 may be an aluminum plate, an aluminum alloy plate, a copper plate, or a steel plate, these materials are cost-effective and readily available, and can have excellent supporting strength and heat exchange performance even at smaller thicknesses.

Certainly, this application is not limited thereto. The reinforcing partition 2 may alternatively employ other materials with good thermal conductivity, such as high-strength ceramic materials, heat-conducting plastics, or carbon materials.

In some embodiments, the reinforcing partition 2 is a solid structure, meaning that the reinforcing partition 2 is not in the form of a solid plate, in other words, the reinforcing partition 2 has no holes, channels, or cavities 21 of any form opened on it (however, pores present in the material itself can exist).

In the foregoing technical solution, by configuring the reinforcing partition 2 as a solid structure, that is, in the form of a solid plate, the reinforcing partition 2 can have excellent strength, improving the reliability of support for the pouch cell 1, and enabling the pouch cell 1 to receive more stable and reliable support. This is more conducive to addressing the issue of forces transmitted between adjacent pouch cells 1 (that is, pouch cells 1 on two sides of the reinforcing partition 2) and reducing the squeezing between adjacent pouch cells (that is, pouch cells 1 on two sides of the reinforcing partition 2).

In some embodiments, referring to FIG. 8, FIG. 8 is a cross-sectional view of the reinforcing partition 2 according to some embodiments of this application, with a cavity 21 formed within the reinforcing partition 2, meaning that the reinforcing partition 2 is not a solid structure. It is noteworthy that the cavity 21 may be or may not be filled with a medium. When filled with a medium, the cavity 21 may be filled with a force-absorbing buffer medium, or may be filled with a heat-absorbing transfer medium.

In the foregoing technical solution, by configuring the cavity 21 inside the reinforcing partition 2, the reinforcing partition 2 can use the cavity 21 to absorb the expansion force of the pouch cells 1, in other words, the reinforcing partition 2 provides an expansion space, which prevents excessive squeezing on the pouch cells 1 when the pouch cells 1 expand too much, thus enhancing the reliability of the cell array 10. Furthermore, when the cell array 10 encounters some collisions, the cavity 21 can be used to absorb the impact force to protect the pouch cells 1.

In some embodiments, referring to FIG. 6 and FIG. 8, the cavity 21 includes a heat exchange flow channel 211 for accommodating a heat exchange medium. That is to say, some cavities 21 can allow a heat exchange medium to circulate or store a heat exchange medium. In this case, the reinforcing partition 2 may use its own material to exchange heat with the pouch cell 1; or may conduct heat exchange with the pouch cell 1 through a heat exchange medium in the heat exchange flow channel 211, or may simultaneously exchange heat with the pouch cell 1 through both the material of the reinforcing partition 2 itself and the heat exchange medium in the heat exchange flow channel 211. This enables flexible design for the reinforcing partition 2.

In the foregoing technical solution, the reinforcing partition 2 can exchange heat with the pouch cells 1 through the heat exchange medium in the heat exchange flow channel 211, so the thermal management performance of the reinforcing partition 2 for the pouch cells 1 can be optimized through the selection and control of the heat exchange medium. Additionally, the heat exchange flow channel 211 can be connected to an external thermal management system, allowing the heat exchange medium to circulate and have its temperature regulated. In this way, the reinforcing partition 2 can integrate a liquid cooling heat exchange function, which reduces additional heat exchange structures, thereby simplifying the battery apparatus 100, reducing the number of parts, and increasing the energy density of the battery apparatus 100.

In some embodiments, referring to FIG. 6 and FIG. 8, the heat exchange flow channel 211 penetrates from one end of the reinforcing partition 2 to the other end in a length direction of the reinforcing partition 2. To be specific, the heat exchange flow channel 211 runs through the reinforcing partition 2, and the heat exchange flow channel 211 has openings at both ends of the reinforcing partition 2 in the length direction of the reinforcing partition 2. This configuration enables a heat exchange medium to enter into the heat exchange flow channel 211 from the opening on one side, traverse the entire length of the reinforcing partition 2, and flow out of the heat exchange flow channel 211 through the opening on the opposite side. Thus, by configuring the heat exchange flow channel 211 to penetrate from one end of the reinforcing partition 2 to the other end in the length direction of the reinforcing partition 2, the heat exchange performance of the reinforcing partition 2 with the pouch cells 1 along the entire length direction can be enhanced.

It is noteworthy that the extension direction of the heat exchange flow channel 211 is not limited. For example, it may extend along a straight line parallel to the length direction of the reinforcing partition 2, so as to facilitate the processing of the reinforcing partition 2, for example, extrusion molding. Alternatively, in other embodiments, the heat exchange flow channel 211 may extend along an oblique line inclined to the length direction of the reinforcing partition 2, or the heat exchange flow channel 211 may extend along a wavy line, a serrated line, or the like. In this case, the reinforcing partition 2 may be processed through splicing or the like.

In some embodiments, referring to FIG. 8, a reinforcing rib 22 is provided inside the cavity 21. It is noteworthy mentioning that the position and shape of the reinforcing rib 22 are not limited and can be specifically configured as needed to provide support.

In the foregoing technical solution, by installing the reinforcing rib 22 within the cavity 21, the reinforcing partition 2 can have the cavity 21 while possessing good supporting strength, which enhances the reliability of the reinforcing partition 2 to support the pouch cells 1, can ensure the support reliability of the reinforcing partition 2 while reducing the weight of the reinforcing partition 2 and reducing the material costs of the reinforcing partition 2, and achieves lightweight and cost-effective battery apparatus 100.

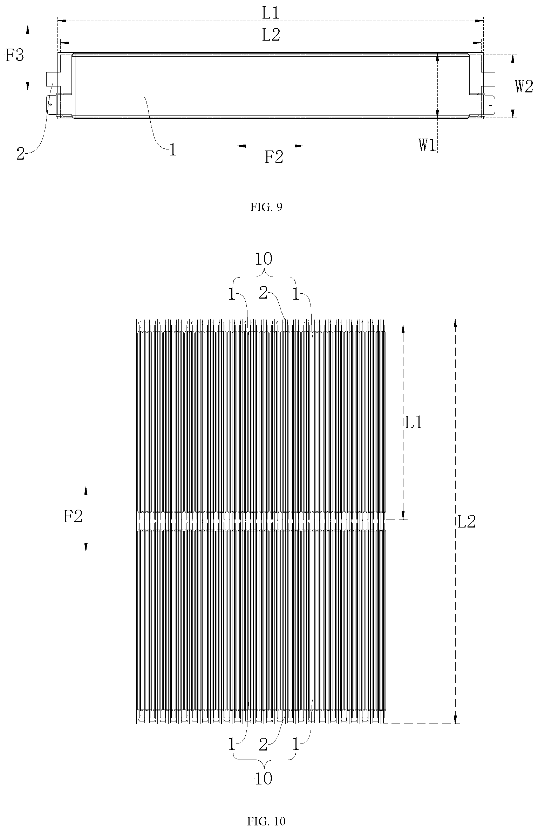

Referring FIG. 9, FIG. 9 is a schematic diagram of fitting between the pouch cell 1 and the reinforcing partition 2 according to some embodiments of this application.

In some embodiments, the length direction of the reinforcing partition 2 extends along the length direction of the pouch cell 1; in other words, the length direction of the reinforcing partition 2 is consistent with the length direction of the pouch cell 1. Similarly, the thickness direction of the reinforcing partition 2 is consistent with the thickness direction of the pouch cell 1, and consequently the width direction of the reinforcing partition 2 consistent with the width direction of the pouch cell 1. The thickness direction of the pouch cell 1 is a first direction F1, the length direction of the pouch cell 1 is a second direction F2, and the width direction of the pouch cell 1 is a third direction F3. In this way, without occupying much space, the reinforcing partition 2 can significantly cover the pouch cell 1, enhancing support and heat exchange effects on the pouch cell 1.

For example, referring to FIG. 9, a length L2 of the reinforcing partition 2 is greater than 80% of a length L1 of the pouch cell 1. The "length of the pouch cell 1" is a length of the main body of the pouch cell 1, where the main body does not include the part of the pouch cell 1 that extends beyond the pouch shell 11 (for example, a part of the conductive element 12 extending beyond the pouch shell 11 as mentioned later). For example, the length L2 of the reinforcing partition 2 is greater than 80%, 81%, 82%, 84%, 85%, 90%, 100%, 120%, 150%, 170%, 200%, 210%, 220%, 230%, 240%, or the like of the length L1 of the pouch cell 1.

In the foregoing technical solution, by configuring the length L2 of the reinforcing partition 2 to be greater than 80% of the length L1 of the pouch cell 1, the pouch cell 1 and the reinforcing partition 2 can have a larger heat transfer surface and support surface along the length direction of the pouch cell 1, so that the reinforcing partition 2 to cover a significant part of the pouch cell 1 along the length direction of the pouch cell 1, and the reinforcing partition 2 can provide good support, heat transfer, and separation effects for the pouch cell 1.

For example, referring to FIG. 9, a width W2 of the reinforcing partition 2 is greater than 80% of a width W1 of the pouch cell 1. The "width of the pouch cell 1" is a width of the main body of the pouch cell 1, where the main body does not include the part of the pouch cell 1 that extends beyond the pouch shell 11 (for example, a part of the conductive element 12 extending beyond the pouch shell 11 as mentioned later). For example, the width W2 of the reinforcing partition 2 is greater than 80%, 81%, 82%, 84%, 85%, 90%, 100%, or the like of the width W1 of the pouch cell 1.

In the foregoing technical solution, by configuring the width W2 of the reinforcing partition 2 to be greater than 80% of the width W1 of the pouch cell 1, the pouch cell 1 and the reinforcing partition 2 can have a larger heat transfer surface and support surface along the width direction of the pouch cell 1, so that the reinforcing partition 2 can cover a significant part of the pouch cell 1 along the width direction of the pouch cell 1, and the reinforcing partition 2 can provide good support, heat transfer, and separation effects for the pouch cell 1.

For example, referring to FIG. 9, the length L2 of the reinforcing partition 2 is greater than 80% of the length L1 of the pouch cell 1, and the width W2 of the reinforcing partition 2 is also greater than 80% of the width W1 of the pouch cell 1. Thus, the reinforcing partition 2 can cover significant parts of the pouch cell 1 in both the length and width directions of the pouch cell 1, and the reinforcing partition 2 can provide good support, heat transfer, and separation effects for the pouch cell 1.

In some embodiments, referring to FIG. 10, FIG. 10 is a schematic diagram of a plurality of cell arrays 10 according to some embodiments of this application. The plurality of adjacent cell arrays 10 arranged along the length direction of the pouch cell 1 share the reinforcing partition 2. For example, there may be two, three, or four cell arrays 10 arranged along the length direction of the pouch cell 1.

In the foregoing technical solution, arranging two cell arrays 10 along the length direction of the pouch cell 1 helps to increase the energy density of the battery apparatus 100. In addition, compared to the solution of using a single longer pouch cell, in this embodiment, the length of a single pouch cell 1 can be reduced, thereby reducing the difficulty of processing a single pouch cell 1. Moreover, by sharing the reinforcing partition 2, the number of reinforcing partitions 2 arranged can be reduced, enhancing the stability of the overall structure.

For example, referring to FIG. 10, the length L2 of the reinforcing partition 2 is more than twice the length L1 of the pouch cell 1, so that two adjacent cell arrays 10 arranged along the length direction of the pouch cell 1 (for example, the second direction F2 as shown in the figure) share the reinforcing partition 2. For example, the length L2 of the reinforcing partition 2 is more than 2.1 times, 2.2 times, 2.3 times, 2.4 times, 2.5 times, 2.6 times, or the like than the length L1 of the pouch cell 1.

In the foregoing technical solution, by configuring the length of the reinforcing partition 2 to be greater than twice the length of the pouch cells 1, two adjacent cell arrays 10 arranged along the length direction of the pouch cell 1 share the reinforcing partition 2, and the reinforcing partition 2 can simultaneously support two pouch cells 1 arranged adjacent to each other along the length direction of the pouch cell 1, and the reinforcing partition 2 shared along the length direction of the pouch cell 1 can provide extensive, effective, and sufficient support and heat exchange for each pouch cell 1.

Certainly, this application is not limited thereto. At least three adjacent cell arrays 10 arranged along the length direction of the pouch cell 1 (for example, the second direction F2) can share the reinforcing partition 2. In this case, the length of the reinforcing partition 2 may be extended accordingly, but this will not be elaborated herein.

In some embodiments, referring to FIG. 9, the width W1 of the reinforcing partition 2 is less than the width W2 of the pouch cell 1.

In the foregoing technical solution, by configuring the width of the reinforcing partition 2 to be less than the width of the pouch cell 1, the reinforcing partition 2 is not likely to extend beyond the pouch cell 1 along the width direction, which prevents the occupation of space of the pouch cell 1 along the width direction of the pouch cell 1, and helps to arrange other components such as a heat exchange plate 9 mentioned later of the battery apparatus 100 on the width side of the pouch cell 1.

Furthermore, under the condition that the width W1 of the reinforcing partition 2 is defined to be less than the width W2 of the pouch cell 1 and the width W2 of the reinforcing partition 2 is greater than 80% of the width W1 of the pouch cell 1, the reinforcing partition 2 can provide efficient support and heat exchange for the pouch cell 1, and unnecessary space occupied can be minimized.

In some embodiments, the reinforcing partition 2 is adhesively connected to the pouch cell 1. For example, the reinforcing partition 2 may be fixed to the pouch shell 11 of an adjacent pouch cell 1 through adhesion, where the method of adhesion is not limited, for example, applying adhesive and using double-sided adhesive may be adopted.

Thus, the reinforcing partition 2 is adhesively connected to the adjacent pouch cell 1, which makes the connection simple and the fixation reliable, and the reinforcing partition 2 can stably exchange heat with the pouch cell 1. Furthermore, the adhesive layer occupies a smaller space, enabling the reinforcing partition 2 and pouch cells 1 to be arranged compactly, which in turn makes the overall structure of the cell array 10 more compact and stable, thereby helping to increase the energy density of the battery.

For example, the reinforcing partition 2 is adhesively fixed to the pouch cell 1 through double-sided adhesive. For example, during the assembly of the cell array 10, double-sided adhesive may be placed between the pouch cell 1 and the reinforcing partition 2. For example, the double-sided adhesive may be first bonded to either the pouch cell 1 or the reinforcing partition 2, and then to the other, so that the pouch cell 1 and the reinforcing partition 2 are adhesively fixed through the double-sided adhesive.

Thus, the reinforcing partition 2 is adhesively fixed to the adjacent pouch cell 1 using double-sided adhesive, which can prevent the problem of adhesive overflow, avoid the space occupied by overflow adhesive, and eliminate the need for subsequent cleaning of the overflowed adhesive. Certainly, if the adhesive overflow can be well-managed and the distribution of heat-conducting adhesive can be controlled for uniformity, the pouch cell 1 and reinforcing partition 2 may alternatively be bonded using heat-conducting adhesive.

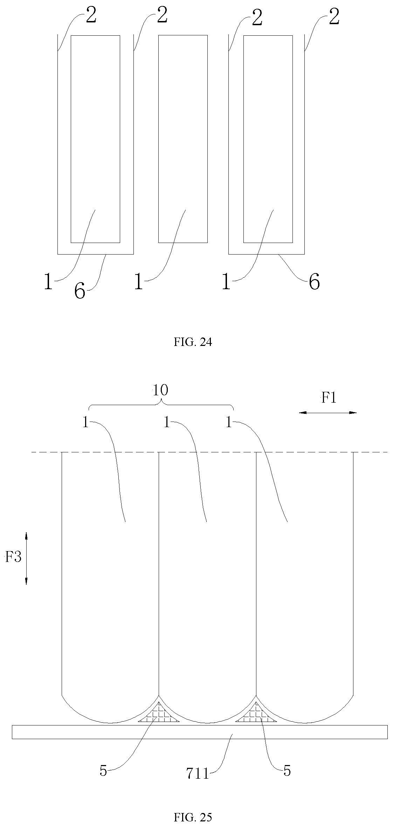

In some embodiments, in combination with FIG. 24, the cell array 10 includes a plurality of reinforcing partitions 2 arranged along the thickness direction of the pouch cell 1, and two reinforcing partitions 2 arranged adjacent to each other along the thickness direction of the pouch cell 1 and respectively disposed on two sides of at least one pouch cell along the thickness direction of the pouch cell 1 are connected through a connecting plate 6 located in a peripheral region of the pouch cell 1.

Thus, by configuring the connecting plate 6, the reliability of support for the pouch cells 1 by the reinforcing partition 2 is enhanced, and the position of the connecting plate 6 configured does not interfere with the pouch cells 1.

For example, the second direction F2 may be the length direction of the pouch cell 1, the third direction F3 may be the width direction of the pouch cell 1, and the first direction F1 is the thickness direction of the pouch cell 1. The two sides of the pouch cell 1 along the width direction of the pouch cell 1 and the two sides of the pouch cell 1 along the length direction of the pouch cell 1 belong to peripheral regions of the pouch cell 1. The connecting plate 6 may be positioned at any of these regions. For example, the connecting plate 6 may be positioned on one side of the pouch cell 1 along the width direction of the pouch cell 1, so as to avoid interference with a connection portion 23 mentioned later.

Every two adjacent reinforcing partitions 2 may be connected through the connecting plate 6. Alternatively, some pairs of adjacent reinforcing partitions 2 are connected through the connecting plate 6, and some pairs of adjacent reinforcing partitions 2 are connected through the connecting plate 6. The reinforcing partition 2 and connecting plate 6 may be assembled or may be integrally formed.

For example, in some embodiments, the connecting plate 6 is disposed between the two reinforcing partitions 2 the connecting plate 6 connects and integrally connected with the two reinforcing partitions 2 into a U-shaped shell. Thus, the process of connecting the connecting plate 6 with the reinforcing partition 2 is eliminated, enhancing the reliability of connection between the connecting plate 6 and the reinforcing partition 2.

In some embodiments, the reinforcing partition 2 is sandwiched between every two adjacent pouch cells 1 in the cell array 10. In the foregoing technical solution, by sandwiching the reinforcing partition 2 between every two adjacent pouch cells 1 in the cell array 10, each pouch cell 1 can receive support and undergo heat exchange from the reinforcing partition 2, thus more effectively optimizing the reliability and performance of the cell array 10.

In some embodiments, a plurality of pouch cells 1 are sandwiched between two adjacent reinforcing partitions 2 in the cell array 10. For example, when the plurality of pouch cells 1 in the cell array 10 are arranged along the first direction F1, the plurality of pouch cells 1 are sandwiched between two adjacent reinforcing partitions 2 along the first direction F1. In other words, no reinforcing partition 2 is provided among the plurality of pouch cells 1 sandwiched between two adjacent reinforcing partitions 2 any more, that is to say, not every pair of adjacent pouch cells 1 in the cell array 10 has a reinforcing partition 2 sandwiched between them. In this solution, the number of reinforcing partitions 2 can be reduced, and the cost of the reinforcing partitions 2 used can be lowered.

For example, when a plurality of pouch cells 1 are sandwiched between two adjacent reinforcing partitions 2 in the battery cell row 10, the number of pouch cells 1 sandwiched between two adjacent reinforcing partitions 2 in the cell array 10 may be less than or equal to four. For example, when a plurality of pouch cells 1 in the cell array 10 are arranged in the first direction F1, the number of pouch cells 1 sandwiched between two adjacent reinforcing partitions 2 in the first direction F1 may be less than or equal to four. For example, the number of pouch cells 1 sandwiched between two adjacent reinforcing partitions 2 in the first direction F1 may be four, three, or two.

Thus, when the number of pouch cells 1 between the two adjacent reinforcing partitions 2 is configured to be less than or equal to four, so that the number of pouch cells 1 between the two adjacent reinforcing partitions 2 is more appropriate, avoiding the problem that the number of pouch cells 1 between two reinforcing partitions 2 is too many and exceeds the support capacity of the reinforcing partitions 2, and ensuring that each pouch cell 1 between the two reinforcing partitions 2 can receive reliable support from the two reinforcing partitions 2.

In some embodiments, still referring to FIG. 6, a buffer element 3 is sandwiched between at least two adjacent pouch cells 1 in the cell array 10, stiffness of the buffer element 3 being less than stiffness of the pouch shell 11.

Thus, by configuring the buffer element 3 between two adjacent pouch cells 1 and having the stiffness of the buffer element 3 less than that of the pouch shell 11, the buffer element 3 can provide expansion space for the pouch cells 1, allowing the buffer element 3 to absorb the expansion deformation of the pouch cells 1 and vibrations from external impacts well, thereby improving the overall structural stability of the cell array 10.

The material of the buffer element 3 is not limited and may be, for example, a foam layer or a silicone layer. The buffer element 3 of these materials offers better absorption capability and is relatively low-cost and lightweight, which is conducive to the lightweight and cost-effective design of the battery apparatus 100.

For example, the pouch cell 1 and buffer element 3 may be adhesively fixed or may abut each other. For example, applying adhesive or using double-sided adhesive may be adopted. The problem of adhesive overflow can be avoided when double-sided adhesive is used. Certainly, if the problem of adhesive overflow is well-managed and the distribution of heat-conducting adhesive can be controlled for uniformity, the pouch cell 1 and buffer element 3 may alternatively be bonded using heat-conducting adhesive.

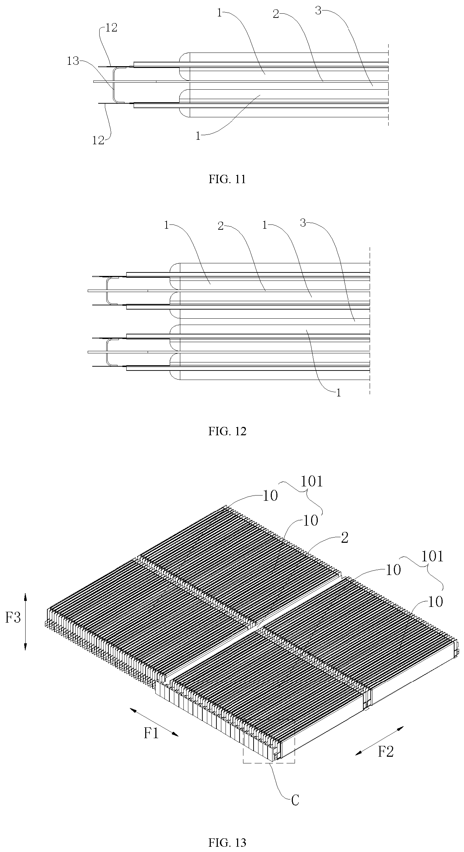

In some embodiments, referring to FIG. 11, FIG. 11 is a partial schematic diagram of the cell array 10 according to some embodiments of this application. Both the buffer element 3 and the reinforcing partition 2 are disposed between at least two adjacent pouch cells 1 in the cell array 10. For example, both the buffer element 3 and the reinforcing partition 2 may be provided between every two adjacent pouch cells 1 in the cell array 10, or both the buffer element 3 and the reinforcing partition 2 may be provided between some adjacent pouch cells 1 in the cell array 10, while at most one of the buffer element 3 and the reinforcing partition 2 is disposed between the remaining adjacent pouch cells 1.

In the foregoing technical solution, when both the buffer element 3 and the reinforcing partition 2 are disposed between two adjacent pouch cells 1, the cooperation between the reinforcing partition 2 and the buffer element 3 allows two adjacent pouch cells 1 to be effectively separated, which can play both a buffering role and a supporting role, thereby enhancing the reliability of the cell array 10. For example, the reinforcing partition 2 and the buffer element 3 may be adhesively fixed or may abut each other.

When both the buffer element 3 and the reinforcing partition plate 2 are disposed between two adjacent pouch cells 1, the buffer element 3 is sandwiched between two adjacent reinforcing partitions 2 to form a partition group, the partition group being disposed between two adjacent pouch cells 1. This can ensure that the pouch cells 1 on two sides of the buffer element 3 also receive good heat dissipation.

In some embodiments, referring to FIG. 12, FIG. 12 is a partial schematic diagram of a cell array 10 according to some other embodiments of this application. At most one of the buffer element 3 and the reinforcing partition 2 is disposed between any two adjacent pouch cells 1 in the cell array 10. To be specific, only the buffer element 3, only the reinforcing partition 2, or neither the buffer element 3 nor the reinforcing partition 2 may be disposed between any two adjacent pouch cells 1 in the cell array 10. In other words, the buffer element 3 and reinforcing partition 2 cannot be concurrently disposed between two adjacent pouch cells 1.

In the foregoing technical solution, by configuring at most one of the buffer element 3 and the reinforcing partition 2 between any two adjacent pouch cells 1 in the cell array 10, the spacing between the two adjacent pouch cells 1 can be reduced, the compactness of fitting between adjacent pouch cells 1, and the energy density of the battery apparatus 100 can be increased. Additionally, there is no need to consider the issue of fitting between the reinforcing partition 2 and the buffer element 3, thereby simplifying assembly.

In some embodiments, referring to FIG. 12, at least one pouch cell 1 in the cell array 10 is sandwiched between the buffer element 3 and the reinforcing partition 2. To be specific, one or more pouch cells 1 in the cell array 10 may be sandwiched between the buffer element 3 and the reinforcing partition 2.

In the foregoing technical solution, the pouch cell 1 sandwiched between the buffer element 3 and the reinforcing partition 2 can be supported by and undergone heat with the reinforcing partition 2 on one side, and can also be buffered by the buffer element 3 on the other side, thereby improving the reliability and performance of the pouch cell 1.

It is noteworthy that the arrangement of the reinforcing partition 2 and buffer element 3 within the cell array 10 can be flexibly and conveniently chosen, so that the buffer element 3 and the reinforcing partition 2 can provide good support, heat exchange, and buffering for each pouch cell 1 in the cell array 10, thereby enhancing the reliability of the battery apparatus 100.

For example, referring to FIG. 12, the buffer element 3 and reinforcing partition 2 in the cell array 10 are alternately arranged. For example, when a plurality of pouch cells 1 in the cell array 10 are arranged along the thickness direction of the pouch cell 1, the buffer element 3 and the reinforcing partition 2 are alternately arranged along the thickness direction of the pouch cell 1. To be specific, along the thickness direction of the pouch cell 1, every pouch cell 1 in the cell array 10 is sandwiched between the buffer element 3 and the reinforcing partition 2, with one reinforcing partition 2 disposed between every two adjacent buffer elements 3, and one buffer element 3 disposed between every two adjacent partitions 2.

Thus, the buffer element 3 or the reinforcing partition 2 is arranged between two adjacent pouch cells 1 in the cell array 10, with the buffer elements 3 and the reinforcing partitions 2 alternately arranged, which makes the arrangement of the buffer elements 3 and the reinforcing partitions 2 in the cell array 10 more balanced, ensuring that each pouch cell 1 in the cell array 10 receives stable and reliable support, undergoes heat exchange, and achieves a buffering effect.

In some embodiments, the buffer element 3 covers more than 80% of an area of a side surface (that is, a side surface of the pouch cell 1 facing the buffer element 3) of the pouch cell 1 along the thickness direction. For example, the buffer element 3 may cover 80%, 81%, 82%, 84%, 85%, 90%, 100%, or the like of the area of the side surface of the pouch cell 1 along the thickness direction.

In the foregoing technical solution, by configuring the buffer element 3 to cover more than 80% of the area of the side surface of the pouch cell 1 along the thickness direction, the pouch cell 1 and the buffer element 3 can form a large buffering mating area, thus improving the buffering effect of the buffer element 3 on the pouch cell 1, enabling the pouch cell 1 to obtain buffering in a larger range, and enhancing the reliability of the pouch cell 1.

In some embodiments, the buffer element 3 is not limited to being located between adjacent pouch cells 1. For example, the buffer element 3 may be disposed at two ends of the cell array 10 in the first direction F1. In this case, all pouch cells 1 in the cell array 10 may be sandwiched between the buffer elements 3 at the two ends, which helps to reduce the space occupied, increase the energy density of the battery apparatus 100, and achieve a buffering effect.

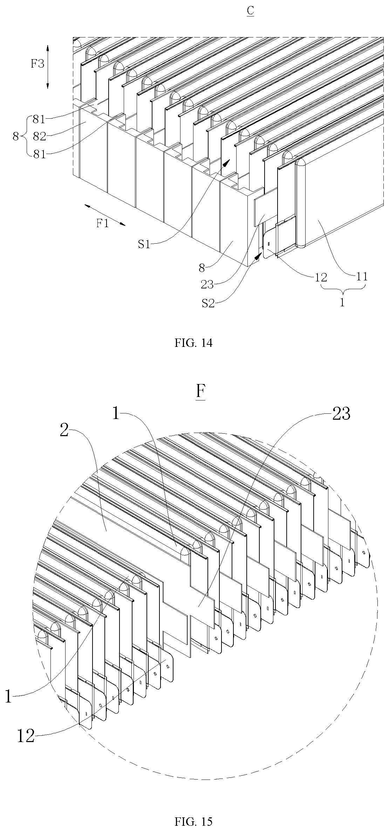

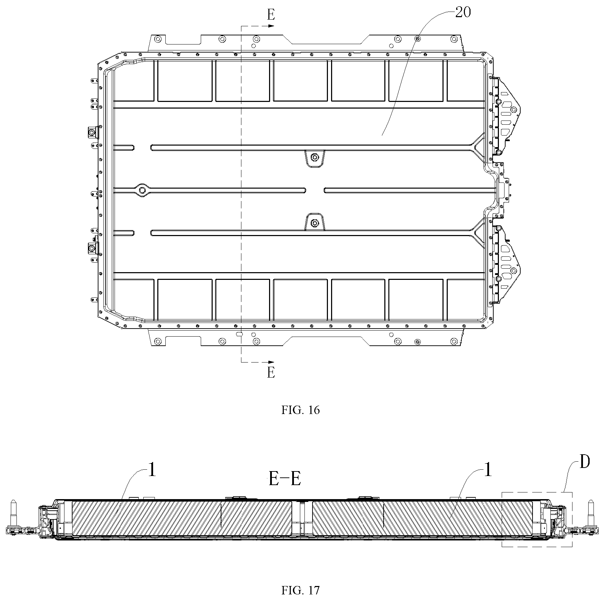

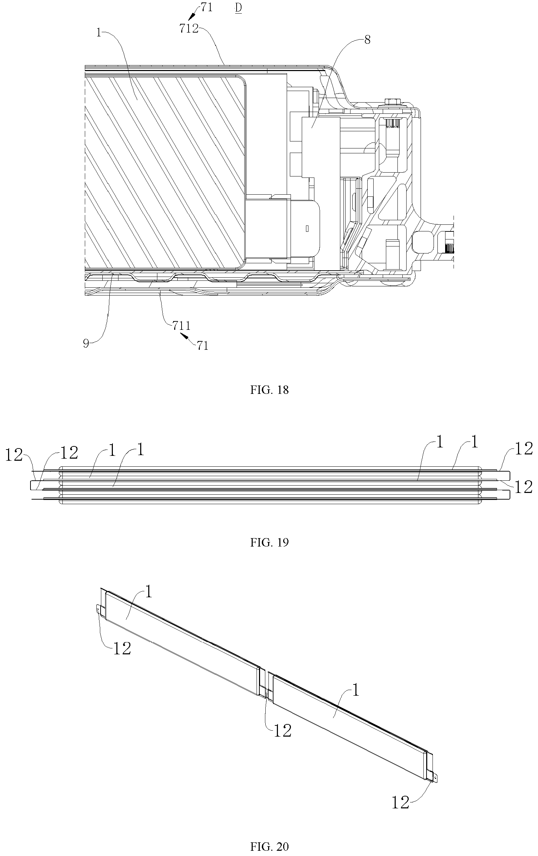

FIG. 13 is a schematic diagram of connection between the cell array 10 and the mounting bracket 8 according to some embodiments of this application; FIG. 14 is an enlarged view of section C framed in FIG. 13; FIG. 15 is an enlarged view of section F framed in FIG. 4; FIG. 16 is a schematic diagram of the battery apparatus 100 according to some embodiments of this application; FIG. 17 is a cross-sectional view along line E-E in FIG. 16; and FIG. 18 is an enlarged view of section D framed in FIG. 17.

In some embodiments, referring to FIG. 3 and in combination with FIG. 13 to FIG. 15, the battery apparatus 100 includes the box 20 for loading the cell array 10, an edge of the reinforcing partition 2 has a connecting portion 23 protruding from the pouch cell 1, and the connecting portion 23 is configured to form a connection with the box 20. Specifically, when the reinforcing partition 2 is connected to the box 20, the pouch cell 1 itself may be connected to the box 20 through, for example, adhesive potting, or the pouch cell 1 may not be connected to the box 20.

In the foregoing technical solution, the reinforcing partition 2 is connected to the box 20, which can realize the reliable connection between the cell array 10 and the box 20 and improve the connection reliability between the cell array 10 and the box 20.

In some embodiments, when an area of a side surface (for example, a side surface of the pouch cell 1 along the width direction) of the pouch cell 1 facing the box 20 is relatively small, it is difficult to achieve reliable connection between the pouch cell 1 and the box 20, so the reinforcing partition 2 is used to connect to the box 20, which can enhance the reliability of the connection between the cell array 10 and the box 20, and ensure stable and reliable operation of the pouch cell 1.

Certainly, this application is not limited thereto. In other embodiments of this application, for example, a large surface of the pouch cell 1 (such as a side surface of the pouch cell 1 along the thickness direction of the pouch cell 1) may be configured to face the box 20.

In some embodiments, referring to FIG. 14 and FIG. 18, the box 20 includes a box body 7 and a mounting bracket 8. The mounting bracket 8 is mounted within the box body 7, and the connecting portion 23 is connected to the mounting bracket 8. The connecting method between the box body 7 and the mounting bracket 8 is not limited; and it may be either a detachable connection or may be a non-detachable connection.

In the foregoing technical solution, by disposing the mounting bracket 8 within the box body 7 and connecting the reinforcing partition 2 with the box 20 through the mounting bracket 8, the difficulty of the connection between the reinforcing partition 2 and the box 20 can be reduced, allowing for flexible installation of the reinforcing partition 2 and the box 20. For example, the reinforcing partition 2 may be mounted on the mounting bracket 8 first, and then the mounting bracket 8 may be installed into the box body 7; or the reinforcing partition 2 may be mounted on the box body 7 first, and then the mounting bracket 8 may be installed into the mounting bracket 8. Furthermore, the shape and position of the mounting bracket 8 may be flexibly adjusted so as to further reduce the difficulty of connection between the mounting bracket 8 and the reinforcing partition 2 and enhance the reliability of connection between the mounting bracket 8 and the reinforcing partition 2. Additionally, a material of the mounting bracket 8 may be flexibly selected so as to improve the reliability and stability of the mounting bracket 8 in securing the cell array 10.

The material of the mounting bracket 8 is not limited. For example, the mounting bracket 8 may be made of a metal material so as to enhance connection strength. The connection method between the box body 7 and the mounting bracket 8 is not limited and may be screwing, riveting, welding, or the like.

In some embodiments, as shown in FIG. 13 and FIG. 14, the pouch cells 1 in the cell array 10 are arranged along the thickness direction of the pouch cell 1 (for example, the first direction F1), with the pouch cell 1 set upright, meaning that the width direction of the pouch cell 1 (for example, the third direction F3) is vertical and the length direction of the pouch cell 1 (for example, second direction F2) is horizontal. The mounting bracket 8 is disposed on one side of the pouch cell 1 along the length direction of the pouch cell 1 (for example, second direction F2).

It can be understood that, in such arrangements, the thickness direction of the pouch cell 1 is horizontal, the plurality of pouch cells 1 in the cell array 10 are arranged horizontally, and the mounting bracket 8 is also arranged horizontally together with the pouch cells 1.

Thus, both the cell array 10 and the mounting bracket 8 can reduce the occupation of vertical space, which helps to enhance the structural compactness of the battery apparatus 100 in the vertical direction. The size of the battery apparatus 100 in the vertical direction is reduced, which is advantageous for arranging the battery apparatus 100 in vertically constrained space (for example, under a car). Moreover, there is no vertical stacking relationship among the pouch cells 1 in the cell array 10, which enhances the consistency of all pouch cells 1 in the cell array 10. Furthermore, the position of the mounting bracket 8 is conducive to the connection with each reinforcing partition 2 in the cell array 10, thereby improving the reliability and stability of the mounting bracket 8 in securing the cell array 10.

For example, in combination with FIG. 13, when the battery apparatus 100 includes a plurality of such cell arrays 10, these cell arrays 10 may be arranged along the thickness direction and/or the length direction of the pouch cell 1, thereby further minimizing the space occupied in the vertical direction.

In some embodiments, as shown in FIG. 14, an upper end of the mounting bracket 8 is lower than an upper end of the pouch cell 1 so as to form an upper clearance space S1 above the mounting bracket 8, and the connecting portion 23 is connected to the mounting bracket 8 at a position below the upper clearance space S1.

In the foregoing technical solution, the upper clearance space S1 is reserved above the mounting bracket 8, and thus the upper clearance space S1 can be used to arrange other components of the battery apparatus 100. For example, circuits may be arranged. This enables full utilization of the space above the mounting bracket 8, reduces spaces occupied in other regions, and improves the compactness and energy density of the battery apparatus 100.

In some embodiments, as shown in FIG. 14 to FIG. 18, the connecting portion 23 is connected to an upper portion of the mounting bracket 8, and a lower end of the connecting portion 23 is higher than a lower end of the mounting bracket 8 so as to form a lower clearance space S2 below the connecting portion 23; and the pouch cell 1 has a conductive element 12 electrically connected to an electrode assembly of the pouch cell 1, where at least part of the conductive element 12 is exposed outside the pouch shell 11 and located in the lower clearance space S2.

In the foregoing technical solution, by configuring the connecting portion 23 with a relatively small size in the vertical direction and positioning it towards the top relative to the mounting bracket 8, the lower clearance space S2 is formed below the connecting portion 23. Thus, the lower clearance space S2 can be used to accommodate the conductive element 12 of the pouch cell 1. This arrangement enables the space below the connecting portion 23 to be fully used, reduces the space occupied in other regions, and improves the compactness and energy density of the battery apparatus 100.

In some embodiments, referring to FIG. 14 to FIG. 18, an upper end of the mounting bracket 8 is lower than an upper end of the pouch cell 1, forming an upper clearance space S1 above the mounting bracket 8. The connecting portion 23 is connected to the mounting bracket 8 below the upper clearance space S1. In addition, the connecting portion 23 is connected to an upper portion of the mounting bracket 8, and a lower end of the connecting portion 23 is higher than a lower end of the mounting bracket 8 so as to form a lower clearance space S2 below the connecting portion 23. The pouch cell 1 has a conductive element 12 electrically connected to an electrode assembly of the pouch cell 1, where at least part of the conductive element 12 is exposed outside the pouch shell 11 and located in the lower clearance space S2.

In this way, by arranging the pouch cells 1 vertically, and by configuring the connecting portion 23 to have a relatively small size in the vertical direction and positioning the connecting portion 23 relatively higher than the mounting bracket 8, clearance spaces are formed above and below the connecting portion 23 respectively. In this way, the space within the battery apparatus 100 can be fully utilized, and the space occupied in other regions can be reduced, which helps to increase the energy density of the battery apparatus 100.

In some embodiments, referring to FIG. 14, one mounting bracket 8 is connected to at least two connecting portions 23.

Thus, by connecting one mounting bracket 8 to at least two connecting portions 23, the quantity of mounting brackets 8 used can be reduced to some extent, decreasing the number of parts and improving assembly efficiency.

In some embodiments, as shown in FIG. 14, the mounting bracket 8 includes a plurality of sidewalls 81 spaced apart from each other along an arrangement direction (for example, the first direction F1 as shown in the figure) of the pouch cells 1 in the cell array 10, where each sidewall 81 corresponds to one connecting portion 23, and the connecting portion 23 is connected to the sidewall 81. Thus, the mounting bracket 8 can reduce the space occupied while being connected to the connecting portion 23, and the material cost of the mounting bracket 8 can be minimized, achieving lightweight.

In some embodiments, referring to FIG. 14, the mounting bracket 8 is provided in plurality, the plurality of mounting brackets 8 are arranged along an arrangement direction (for example, the first direction F1 as shown in the figure) of the pouch cells 1 in the cell array 10, each mounting bracket 8 includes two sidewalls 81 and a connecting wall 82 connecting the two sidewalls 81, and adjacent sidewalls 81 of two adjacent mounting brackets 8 together clamp the same connecting portion 23. It is noteworthy that the connecting portion 23 clamped by two adjacent sidewalls 81 can connect to both sidewalls 81 respectively, or may be connected to only one of the sidewalls 81.

Thus, the difficulty of processing a single mounting bracket 8 can be reduced, facilitating a flexible connection between the pouch cell 1 and the mounting bracket 8. The plurality of mounting brackets 8 may be independently formed, and two adjacent mounting brackets 8 may be or may not be connected. For example, two adjacent mounting brackets 8 may be welded together, or may be connected through a structural adhesive or a fastener.

In some embodiments, in combination with FIG. 3 and FIG. 13, one of the length direction and width direction of the box 20 is a first direction F1, the other is a second direction F2, a height direction of the box 20 is a third direction F3, the pouch cells 1 in the cell array 10 are arranged along the first direction F1, the first direction F1 is the thickness direction of the pouch cell 1, the second direction F2 is the length direction of the pouch cell 1, the third direction F3 is the width direction of the pouch cell 1, and the mounting bracket 8 is provided at each of two ends of the box 20 in the second direction F2.

Thus, the arrangement position of the mounting bracket 8 is conducive to the connection with the various reinforcing partitions 2, does not easily cause an increase in the size of the box 20 in the height direction, and helps to maintain a smaller height of the box 20.

In some embodiments, in combination with FIG. 3, FIG. 13, and FIG. 14, a plurality of mounting brackets 8 arranged along the first direction F1 are provided at each end of the box 20 in the second direction F2.

Thus, providing the plurality of mounting brackets 8 facilitates flexible connection with the plurality of reinforcing partitions 8, thus reducing the difficulty of connection between the reinforcing partitions 2 and the mounting brackets 8. The form of mounting bracket 8 is not limited. For example, reference can be made to the foregoing embodiments, but it is not limited to these embodiments.

In some embodiments, in combination with FIG. 3 and FIG. 13, the box 20 is provided with a battery module 101, where the battery module 101 includes two cell arrays 10 arranged along the second direction F2, all the pouch cells 1 in each cell array 10 are stacked in sequence along the thickness direction of the pouch cell 1, and ends of the two cell arrays 10 in the same battery module 101 that are far away from each other in the second direction F2 are respectively connected to the mounting brackets 8 on the corresponding sides. Thus, the length of a single pouch cell 1 can be reduced to decrease the difficulty of processing a single pouch cell 1.

In some embodiments, in combination with FIG. 3 and FIG. 13, a length direction of the reinforcing partition 2 extends along the second direction F2, two ends of the reinforcing partition 2 in the length direction of the reinforcing partition 2 respectively extend to two ends of the battery module 101 in the second direction F2, so that the two cell arrays 10 in the battery module 101 share the reinforcing partition 2, and the two ends of the reinforcing partition 2 in the length directionof the reinforcing partition 2 are respectively connected to the mounting brackets 8 at the two ends of the box 20 in the second direction F2. For example, during production, two battery cell rows 10 may be connected into a whole first, and then two ends of each reinforcing partition 2 in the length direction are connected to the mounting brackets 8 respectively.

For example, the second direction F2 is the left-right direction, and the mounting bracket 8 is also provided at each of the left end and right ends of the box 20. The two cell arrays 10 in the battery module 101 are arranged in the left-right direction, the left end of the reinforcing partition 2 extends to the left end of the cell array 10 on the left side, and the right end of the reinforcing partition 2 extends to the right end of the cell array 10 on the right side. The left end of the reinforcing partition 2 is connected to the mounting bracket 8 on the left end of the box 20, and the right end of the reinforcing partition 2 is connected to the mounting bracket 8 on the right end of the box 20.

Thus, the length of the reinforcing partition 2 is relatively long, which can reduce the number of reinforcing partitions 2, and improve the overall stability of the battery module 101. Moreover, it is not necessary to provide the mounting bracket 8 between the two cell arrays 10 in the battery module 101, which can reduce the number of mounting brackets 8 used, improve assembly efficiency, and lower production costs.

It is noteworthy that the battery module 101 may be provided in one or may be provided in a plurality along the first direction F1. Thus, box 20 beams or the like may be disposed at interval positions of her plurality of battery modules 101 along the first direction F1.

In some embodiments, in combination with FIG. 5 and FIG. 6, the pouch cell 1 includes a conductive element 12, where the conductive element 12 is electrically connected to the electrode assembly, and at least part of the conductive element 12 is exposed outside the pouch shell 11; and two adjacent pouch cells 1 in the cell array 10 are connected through the conductive element 12.

Thus, two adjacent pouch cells 1 are connected through the conductive element 12, which can simplify the connection of a plurality of pouch cells 1 in the cell array 10, and facilitates the realization of electrical connections among the pouch cells 1 in the battery apparatus 100.

In some embodiments, in combination with FIG. 5 and FIG. 6, the two conductive elements 12 forming the connection are lap jointed, and at least one conductive element 12 is in a bent shape.

Thus, the two conductive elements 12 forming the connection are lap jointed, so that the two conductive elements 12 have a larger connection area, and the two connection conductive elements 12 have more stable and reliable connection. In addition, at least one conductive element 12 is in a bent shape, so that the two pouch cells 1 connected through the conductive elements 12 can be stacked along the thickness direction. Moreover, this type of connection can simplify the structure, reduce parts, and improve assembly efficiency.

For example, the two conductive elements 12 forming the connection may be lap jointed and directly connected by welding or adhesion. The two conductive elements 12 are lap jointed, meaning that the two conductive elements 12 have a certain overlapping area. For example, one conductive element 12 may extend linearly, and the other conductive element 12 may bend toward the foregoing conductive element 12 to achieve lap jointing; or the two conductive elements 12 are both in a bent shape, meaning the two conductive elements 12 may bend towards each other and achieve lap jointing.

Alternatively, in some embodiments, in combination with FIG. 11, the two conductive elements 12 forming the connection are connected through a transition piece 13, and the transition piece 13 is in a bent shape.

Thus, adjacent pouch cells 1 in the cell array 10 are connected through a transition piece 13, and the transition piece 13 is configured to be in a bent shape. This configuration can simplify the design of the conductive element 12, shorten the length of the conductive element 12, and reduce the processing steps and processes of the conductive element 12 during the connection of the pouch cells 1, thereby increasing production efficiency. Moreover, the two pouch cells 1 connected through the conductive element 12 can be stacked along the thickness direction. In addition, standardized transition pieces 13 can be used for fast and efficient connection processing, making the connection of the plurality of pouch cells 1 more convenient and efficient, thereby increasing the production efficiency of the cell array 10.

For example, the two conductive elements 12 forming the connection both extend in a straight line, and the transition piece 13 extends towards the two conductive elements 12 separately through its own bent shape and is lap jointed to the two conductive elements 12 separately. Alternatively, at least one conductive element 12 may be configured to be in a bent shape to match the transition piece 13, so as to increase the lap jointed area between them.

In some embodiments, the bent shape is U-shaped or C-shaped. Thus, this configuration results in a simple structure, is easy to processed and molded, avoids stress concentration problems, and improves structural quality. As a result, the risk of breakage is reduced, and the two pouch cells 1 have more stable and reliable connection and have more stable conductivity. Moreover, the U-shaped conductive element 12 takes up less space compared to the C-shaped conductive element 12.

FIG. 19 is a schematic diagram of the cell array 10 according to some embodiments of this application; and FIG. 20 is a status diagram of two pouch cells 1 in the cell array 10 of FIG. 19 before folding.

In some embodiments, referring to FIG. 19, the conductive element 12 is provided at each of two ends of the pouch cell 1 along the length direction of the pouch cell 1, and the conductive elements 12 at adjacent ends of two adjacent pouch cells 1 along the length direction of the pouch cell 1 are connected.

It can be understood that the length directions, width directions, and thickness directions of the pouch cells 1 in the cell array 10 all correspond consistently, and the pouch cells 1 in the cell array 10 are arranged along the thickness direction of the pouch cell 1. The adjacent ends of two adjacent pouch cells 1 in the cell array 10 are ends close to each other in the length direction. For example, if the length directions of all pouch cells 1 in the cell array 10 are the left-right direction, a left end of a pouch cell 1 and a left end of an adjacent pouch cell 1 are adjacent ends, and similarly, a right end of a pouch cell 1 and a right end of an adjacent pouch cell 1 are adjacent ends.

Thus, by configuring the conductive element 12 at each of two ends of the pouch cell 1 along the length direction of the pouch cell 1, and connecting the conductive elements 12 at adjacent ends of two adjacent pouch cells 1 along the length direction of the pouch cell 1, the space occupied by the pouch cell 1 along the width direction of the pouch cell 1 can be reduced. When the width direction is vertical, this configuration helps to reduce the space occupied in the vertical direction, reduce the size of the battery apparatus 100 in the vertical direction, and increase the energy density of the battery apparatus 100 in the vertical direction.

In some embodiments, when the conductive element 12 is provided at each of two ends of the pouch cell 1 along the length direction of the pouch cell 1, and the conductive elements at adjacent ends of two adjacent pouch cells 1 along the length direction of the pouch cell 1 are connected, the two conductive elements 12 the at two ends of the pouch cell 1 along the length direction of the pouch cell 1 may be configured to have opposite polarities, and the two conductive elements 12 forming the connection have the same or opposite polarities.

Thus, series connection and/or parallel connection can be realized according to need, so that the battery apparatus 100 can be flexibly arranged.

For example, the two conductive elements 12 forming the connection can both be positive electrodes. Thus, by connecting the conductive elements 12 with the same polarity, a parallel connection between the pouch cells 1 can be achieved. For another example, one of the two conductive elements 12 that form the connection is a positive electrode, and the other is a negative electrode. Thus, by connecting the conductive elements 12 with opposite polarities, a series connection between the pouch cells 1 can be achieved.

For example, the positive electrodes of the plurality of pouch cells 1 in the cell array 10 are arranged on the same side along the length direction of the pouch cell 1, and the negative electrodes are arranged on the other side along the length direction of the pouch cell 1. In this way, two adjacent pouch cells 1 can form a parallel connection by connecting the conductive elements 12 with the same polarity on the same side.

Alternatively, for example, when the conductive elements 12 arranged on the same side in the length direction of the plurality of pouch cells 1 in the cell array 10 are arranged in an alternating pattern of positive and negative electrodes, two adjacent pouch cells 1 can form a series connection by connecting the conductive elements 12 with opposite polarities on the same side.

Still alternatively, for example, the arrangement of the positive and negative electrodes of the plurality of pouch cells in the cell array 10 can be more flexibly and complexly arranged according to the needs. For example, at least two adjacent conductive elements 12 on the same side have the same polarity, and at least two adjacent conductive elements 12 on the same side have opposite polarities. In this way, the plurality of pouch cells 1 can form a series-parallel connection by connecting the conductive elements 12 on the same side.

In some embodiments, referring to FIG. 19 and FIG. 20, the cell array 10 includes at least three pouch cells 1, and in two conductive elements 12 of two adjacent pouch cells 1 in the cell array 10 that are respectively located between the two adjacent pouch cells 1, one conductive element 12 is connected to the conductive element 12 on the corresponding side of one adjacent pouch cell 1, and the other conductive element 12 is connected to the conductive element 12 on the corresponding side of another adjacent pouch cell 1.

Thus, a plurality of pouch cells 1 can be arranged in a row first along the length direction of the pouch cell 1, every two adjacent conductive elements 12 are connected, and then the joint of the conductive elements 12 is bended, so that the plurality of pouch cells 1 can be arranged in a row along the thickness direction, thereby simplifying processing and improving production efficiency.

For example, if the cell array 10 is provided with three pouch cells 1, along the thickness direction of the pouch cell 1, the pouch cell 1 located in the middle is called an intermediate cell, and the other two pouch cells 1 are called adjacent cells. When the cell array 10 is provided with four pouch cells 1, among three adjacent pouch cells 1, the one located in the middle is called an intermediate cell, and the two adjacent pouch cells 1 are called adjacent cells. The conductive element 12 at one end of the intermediate cell in the length direction is connected to the conductive element 12 on the same side of one adjacent cell, and the conductive element 12 at the other end of the intermediate cell in the length direction is connected to the conductive element 12 on the same side of the other adjacent cell. Thus, the plurality of pouch cells 1 in the cell array 10 can be connected end-to-end in sequence. In this way, the plurality of pouch cells 1 can be connected conveniently and easily. This arrangement allows the assembly of the cell array 10 to be more efficient and convenient.

In some embodiments, referring to FIG. 3 and FIG. 4, the battery apparatus 100 includes the box 20 for loading the cell array 10, the box 20 is provided with a battery module 101, and the battery module 101 includes two cell arrays 10 arranged along the length direction of the pouch cell 1, where all the pouch cells 1 in each cell array 10 are stacked in sequence along the thickness direction of the pouch cell 1; and the conductive elements 12 of the two cell arrays 10 in the same battery module 101 on sides of the two cell arrays 10 close to each other along the length direction of the pouch cell 1 are connected.

Thus, a plurality of cell arrays 10 may be connected in series and/or in parallel, which facilitates the simplification of the electrical connection within the entire battery apparatus 100.

For example, if the two cell arrays 10 are arranged in the left-right direction, the pouch cells 1 in the two cell arrays 10 are arranged adjacent to each other in the left-right direction. Two adjacent pouch cells 1 from the two cell arrays 10 are used as an example. In one scenario, the conductive element 12 at the right end of the pouch cell 1 in the left cell array 10 is connected to the conductive element 12 at the left end of the pouch cell 1 in the right cell array 10 through, for example, lap jointing. The polarities of the two conductive elements 12 may be configured to be the same or opposite according to series and parallel connection needs. Thus, this configuration results in a simple structure and a convenient and easy connection, and can reduce the steps and processes of bending the conductive elements 12 of two adjacent pouch cells 1 for connection during production, thereby improving the production efficiency of the cell arrays 10 during processing.

In some embodiments, referring to FIG. 3 and FIG. 14, the battery apparatus 100 includes the box 20 for loading the cell array 10, an edge of the reinforcing partition 2 has a connecting portion 23 protruding from the pouch cell 1 along the length direction of the pouch cell 1, and the connecting portion 23 is configured to form a connection with the box 20 and spaced apart from the conductive element 12 along the width direction of the pouch cell 1.

Thus, space can be fully utilized, compactness can be improved, and space occupied by the pouch cells 1 along the width direction can be reduced. When the width direction is vertical, this configuration helps to reduce the space occupied in the vertical direction, reduce the size of the battery apparatus 100 in the vertical direction, and increase the energy density of the battery apparatus 100 in the vertical direction.

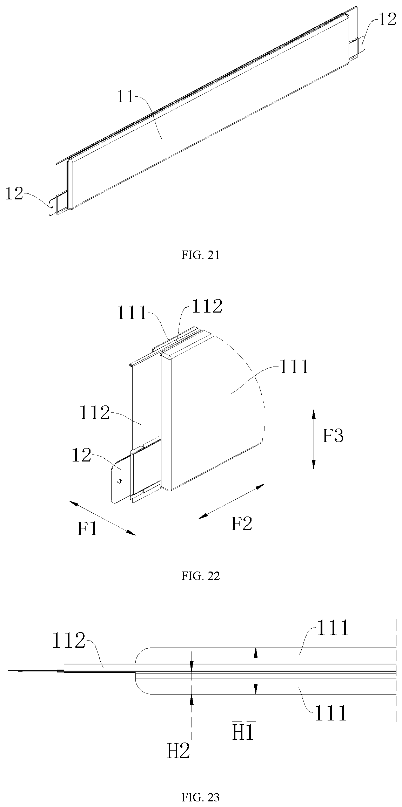

In some embodiments, referring to FIG. 21 and FIG. 22, the pouch shell 11 includes two membrane portions 111 arranged and connected along the thickness direction of the pouch cell 1, where the two membrane portions 111 each define an accommodating groove, the accommodating grooves of the two membrane portions 111 open towards each other along the thickness direction of the pouch cell 1 and together form an accommodating cavity of the pouch shell 11, the electrode assembly is disposed in the accommodating cavity, and a wall thickness of the membrane portion 111 is less than or equal to 0.2 mm.

In this embodiment, the wall thickness of the membrane portion 111 is less than or equal to 0.2 mm. For example, the wall thickness of the membrane portion 111 may be 0.2 mm, 0.19 mm, 0.17 mm, 0.15 mm, 0.1 mm, or the like. In this embodiment, by configuring the wall thickness of the membrane portion 111 to be less than or equal to 0.2 mm, the pouch shell 11 in the pouch cell 1 has relatively small volume and lighter mass, which enables the electrode assembly in the pouch cell 1 to account for a larger proportion in terms of volume and mass. As a result, the energy density of the pouch cell 1 can be significantly increased.

For example, the electrode assembly includes a positive electrode tab, a negative electrode tab, and a separator, and the battery cell 1 mainly relies on migration of metal ions between the positive electrode plate and the negative electrode plate to work. The positive electrode plate includes a positive electrode current collector and a positive electrode active substance layer, where the positive electrode active substance layer is applied on a surface of the positive electrode current collector.

For example, the pouch shell 11 may be made of an aluminum-plastic film. The two membrane portions 111 of the pouch shell 11 that are connected along the thickness direction of the pouch cell 1 can be processed and molded by means of stamping depressions on the aluminum-plastic film substrate. Since both of the two membrane portions 111 define accommodating grooves, the pouch shell 11 can be processed and molded through a double stamping depression method. For example, during the production process of the pouch cell 1, the pouch shell 11 may form two membrane portions 111 with an accommodating groove through the double-stamping depression method. The electrode assembly is placed in the accommodating groove of one of the membrane portions 111, and the other membrane portion 111 is folded towards the membrane portion 111 that accommodates the electrode assembly, so that the two accommodating grooves cooperate to form an accommodating cavity. Then, the pouch cell 1 undergoes subsequent production processes such as edge sealing and electrolyte injection. The two membrane portions 111 form a sealed accommodating cavity through edge sealing, thereby forming a complete pouch shell 11.

In some embodiments, the pouch cell 1 has a size along the thickness direction of the pouch cell 1 that is referred to as a first size H1. Any one membrane portion 111 has a size along the thickness direction of the pouch cell 1 that is referred to as a second size H2. Since the pouch cell 1 includes two membrane portions 111 making up the pouch shell 11, the overall size of the two membrane portions 111 along the thickness direction of the pouch cell 1 is the first size H1. Thus, the sum of the second sizes H2 of the two membrane portions 111 equals the first size H1, and the two second sizes H2 of the two membrane portions 111 may be configured to be the same or different as needed.

In some embodiments, the first size H1 is greater than or equal to 5 mm and less than or equal to 70 mm, for example, 5 mm, 6 mm, 10 mm, 12 mm, 17 mm, 25 mm, 30 mm, 40 mm, 47 mm, 53 mm, 60 mm, 65 mm, 70 mm, or the like. A ratio of the second size H2 to the first size H1 is greater than or equal to 0.4 and less than or equal to 0.6, for example, 0.6, 0.55, 0.5, 0.48, 0.46, 0.45, 0.4, or the like.

The first size H1 is configured to be greater than or equal to 5 mm and less than or equal to 70 mm, which makes the pouch cell 1 thicker. Thus, when paired with the relatively thin pouch shell 11, the pouch cell 1 can have a higher energy density. Moreover, the thickness of the pouch cell 1 can be flexibly configured within a relatively large range as needed, enabling the pouch cell 1 to better meet the usage requirements of the battery apparatuses 100 with different size specifications.

The ratio of the second size H2 to the first size H1 is configured to be greater than or equal to 0.4 and less than or equal to 0.6, which keeps the sizes of the two membrane portions 111 more consistent in the first direction F1. This ensures that the two membrane portions 111 maintain sufficient mechanical strength to satisfy the forming needs of the pouch shell 11, resulting in a stable and reliable pouch shell 11 when the first size H1 of the pouch cell 1 in this embodiment is configured to be greater than or equal to 5 mm and less than or equal to 70 mm.

In this embodiment, by configuring the thickness of the pouch shell 11 to be less than 0.2 mm, the ratio of the second size H2 of any one membrane portion 111 to the first size H1 to be greater than or equal to 0.4 and less than or equal to 0.6, and the first size H1 to be greater than or equal to 5 mm and less than or equal to 70 mm, the pouch cell 1 can have greater thickness and higher energy density. Under the same volume condition, compared to a plurality of pouch cells 1 with thinner thicknesses, the number of pouch cells 1 arranged in this embodiment is smaller. Therefore, the proportion of the pouch shell 11 can be reduced, and consequently, a plurality of pouch cells 1 within the same volume can have a higher energy density. Furthermore, the number of structural components such as reinforcing partitions 2 and buffer elements 3 in the battery apparatus 100 can be reduced, the space of pouch cells 1 arranged in the battery apparatus 100 can be increased. Thus, the overall energy density of the battery apparatus 100 is significantly increased.

When the pouch cell 1 in this embodiment is assembled and arranged in the battery apparatus 100, within the same arrangement space, the battery apparatus 100 can achieve higher energy density with fewer pouch cells 1 arranged. Moreover, due to the reduction in the number of pouch cells, the quantity of structural components such as supporting structures for supporting the pouch cells 1, as well as those for heat conducting, adhesive fixing, and the like, is also significantly reduced. As a result, the battery apparatus 100 can have more space to arrange pouch cells 1. Thus, the overall energy density of the battery apparatus 100 is significantly increased.

For example, the ratio of the second size H2 to the first size H1 may be greater than or equal to 0.45 and less than or equal to 0.55. For example, the ratio of the second size H2 to the first size H1 is 0.45, 0.46, 0.48, 0.49, 0.5, 0.51, 0.53, 0.55, or the like. This makes the sizes of the two membrane portions 111 more consistent in the first direction F1, facilitating processing and manufacturing. Moreover, the two accommodating grooves of the two membrane portions 111 have sufficient depth for arrangement of the electrode assembly, and the two membrane portions 111 maintain relatively consistent mechanical strength, thereby making the overall structure of the pouch shell 11s more stable and reliable. Consequently, the pouch cell 1 can operate and be used stably and reliably.

For example, the ratio of the second size H2 to the first size H1 may be 0.5. In other words, the two membrane portions 111 have the same size in the first direction F1. The two membrane portions 111 can form a symmetrical structure, and the accommodating grooves of the two membrane portions 111 also have the same size. To be specific, by configuring the ratio of the second size H2 to the first size H1 to be 0.5, the two membrane portions 111 can have the same structural construction. This makes the processing and forming of the pouch shell 11 more convenient. Moreover, the two membrane portions 111 can have consistent mechanical strength and structural performance, which enhances the overall structural stability and reliability of the pouch shell 11 and makes the pouch cell 1 more stable.

For example, the first size H1 is greater than or equal to 15 mm and less than or equal to 45 mm, for example, 15 mm, 16 mm, 20 mm, 25 mm, 35 mm, 40 mm, 42 mm, 45 mm, or the like. This gives the pouch cell 1 a relatively large thickness, which can significantly increase the energy density of the battery apparatus 100. Moreover, this reduces the probability of a decrease in the structural stability of the pouch cell 1 caused by an excessively large thickness of the pouch cell 1. Thus, the pouch cell 1 has an appropriate thickness to operate stably and reliably.

For example, the second size H2 is greater than or equal to 3 mm and less than or equal to 35 mm, for example, 3 mm, 5 mm, 6 mm, 8 mm, 15 mm, 30 mm, 35 mm, or the like. In this embodiment, the second size H2 is configured to be greater than or equal to 3 mm and less than or equal to 35 mm, so that the two membrane portions 111 can cooperate to form the pouch shell 11 with the thickness required for the pouch battery, meeting the configuration requirements of the pouch cell 1.

For example, the second size H2 is greater than or equal to 7 mm and less than or equal to 22 mm, for example, 7 mm, 8 mm, 10 mm, 12 mm, 15 mm, 20 mm, 22 mm, or the like. In this embodiment, the second size H2 is configured to be greater than or equal to 7 mm and less than or equal to 22 mm, so that the membrane portion 111 has a more suitable size in the first direction F1. As a result, the membrane portion 111 can have excellent mechanical strength and structural stability, making the overall structure of the pouch shell 11 more stable and reliable. This enables the electrode assembly to be stably and reliably arranged in the accommodating cavity, thus making the pouch cell 1 more stable in operation.

During the processing of the pouch cell 1, the two membrane portions 111 can be subjected to an edge sealing process to seal the accommodating cavity. For example, the edges of the two membrane portions 111 can be connected through hot pressing, cold pressing, welding, and the like, so as to seal the circumference of the accommodating cavity.

In some embodiments, the two membrane portions 111 are separate elements and have their four sides edge-sealed. That is to say, the two membrane portions 111 are separate elements and each have edge sealing structures 112 on all around of the pouch cell 1. Thus, this configuration of a single membrane portion 111 is convenient for processing and can reduce processing difficulty.

In some embodiments, the two membrane portions 111 are integrated elements and each have three sides edge-sealed, to be specific, the two membrane portions 111 are integrated elements and each have edge sealing structures 112 on one long side and two short sides of the pouch cell 1. Thus, this configuration can reduce the number of edge sealing times and can also reduce the entire size of the pouch cells 1 along the width direction, thereby increasing the energy density. Moreover, compared with the edge sealing on all sides, omitting the edge-sealing on one side can avoid the leakage caused by poor edge-sealing, enhancing the reliability of the pouch cell 1.

In some embodiments, referring to FIG. 2, FIG. 3, and FIG. 16 to FIG. 18, the battery apparatus 100 includes the box 20 for loading the cell array 10, the box 20 includes cover plates 71 disposed on two sides of the cell array 10 along the height direction of the box 20, the cover plates 71 on the two sides being a top plate 712 and a bottom plate 711, and the box 20 further includes a heat exchange plate 9, the heat exchange plate 9 being disposed between the cell array 10 and the cover plate 71 and configured to exchange heat with the cell array 10. Thus, the heat exchange plate 9 can easily exchange heat with a plurality of pouch cells 1, allowing the cell array 10 to achieve a good heat-exchange performance, which enables the cell array 10 to work stably and reliably, thereby making the battery apparatus 100 work more stably.

For example, the width direction of the pouch cell 1 is consistent with the height direction of the box 20, both being the up-down direction. The heat exchange plate 9 may be a liquid cooling plate, and the heat exchange plate 9 is disposed on at least one side of the plurality of pouch cells 1 along the width direction of the pouch cell 1. For example, the heat exchange plate 9 may be disposed on one side of the plurality of pouch cells 1 along the width direction of pouch cells 1 or may be disposed on each of two sides of the plurality of pouch cells 1 along the width direction of the pouch cell 1. During operation of the battery apparatus 100, the heat generated by the plurality of pouch cells 1 in the cell array 10 during operation is dissipated through the heat exchange plate 9. When the cell array 10 needs to be heated, the heat exchange plate 9 can transfer heat to the pouch cells 1 in the cell array 10.

In some embodiments, in combination with FIG. 18, the width direction of the pouch cell 1 is consistent with the height direction of the box 20, and a surface of the pouch shell 11 along the width direction of the pouch cell 1 facing the heat exchange plate 9 is a flat surface and connected to the heat exchange plate 9 through a heat-conducting medium.

For example, when the two membrane portions 111 are integrated elements and each have edge sealing structures 112 on one long side and two short sides around the pouch cell 1. The edge sealing structure 112 may not be formed on the surface of the pouch shell 11 facing the heat exchange plate 9. After the pouch shell 11 is folded and formed, the folding lines of the two membrane portions 111 face the heat exchange plate 9.

For example, the heat-conducting medium can be a heat-conducting adhesive, such as a heat-conducting structural adhesive. For example, the heat-conducting medium may be a heat-conducting pad. For example, the heat-conducting pad may be a rubber pad or the like. When the cell array 10 and the heat exchange plate 9 are assembled, the heat-conducting adhesive or heat-conducting pad may be pre-applied onto the surface of the heat exchange plate 9 that mates with the pouch shell 11. The cell array 10 may be integrally placed onto the heat exchange plate 9 and fixedly connected to the heat exchange plate 9 through the heat-conducting adhesive or heat-conducting pad.

In this embodiment, by designing the surface of the pouch shell 11 facing the heat exchange plate 9 as a flat surface, the pouch shell 11 can have a stable mating surface with the heat exchange plate 9, allowing the pouch shell 11 to be fixed to the heat exchange plate 9 more stably and reliably through a heat-conducting adhesive or a heat-conducting pad. This in turn makes the assembly and fixation of the pouch cell 1 on the heat exchange plate 9 more convenient and stable and the cell array 10 fixed to the heat exchange plate 9 more reliably, which can further enhance the heat exchange reliability.

In some embodiments, referring to FIG. 2, FIG. 3, and FIG. 16 to FIG. 18, the battery apparatus 100 includes the box 20 for loading the cell array 10, the box 20 includes cover plates 71 disposed on two sides of the cell array 10 along the height direction of the box 20, the cover plates 71 on the two sides being a top plate 712 and a bottom plate 711, and the box 20 further includes a heat exchange plate 9, the heat exchange plate 9 being disposed between the cell array 10 and the bottom plate 711 and configured to exchange heat with the cell array 10, and a mounting bracket 8 being disposed on a top of the heat exchange plate 9.

Thus, the mounting bracket 8 is disposed on top of the heat exchange plate 9, so that the mounting bracket 8 can exchange heat with the heat exchange plate 9, which avoids heat from concentrating on the mounting bracket 8, thereby helping to improve the overall heat dissipation effect of the battery apparatus 100.

The mounting bracket 8 and the heat exchange plate 9 may be fixedly connected through, for example, a fastener or a structural adhesive. For another example, the mounting bracket 8 may simply be disposed on the heat exchange plate 9 without any fixation between them.

In some embodiments, the battery apparatus 100 includes the box 20 for loading the cell array 10, the box 20 includes a top plate 712 and a bottom plate 711 that are disposed on two sides of the cell array 10 along a height direction of the box 20, the width direction of the pouch cell 1 is consistent with the height direction of the box 20, and structural adhesive is filled between the cell array 10 and the bottom plate 711. Thus, this configuration can enhance the stiffness of the pouch cell 1 along the height direction of the box 20.

For example, the structural adhesive is heat-conducting adhesive, which facilitates the heat dissipation of the pouch cell 1. In this embodiment, a heat exchange plate 9 may be or may not be disposed between the bottom plate 711 and the cell array 10. When a heat exchange plate 9 is disposed, the structural adhesive may be filled between the bottom plate 711 and the heat exchange plate 9 and may also be filled between the heat exchange plate 9 and the cell array 10.

In some embodiments, referring to FIG. 25, the box 20 is provided with a glue blocking strip 5, the cover plate 71 includes a bottom plate 711 located below the cell array 10, a fitting gap is formed between bottoms of two adjacent pouch cells 1 arranged along the first direction F1, and the glue blocking strip 5 is located between the fitting gap and the bottom plate 711. In this embodiment, a heat exchange plate 9 may be or may not be disposed between the bottom plate 711 and the cell array 10. When a heat exchange plate 9 is disposed, the glue blocking strip 5 may be disposed between the heat exchange plate 9 and the pouch cell 1, and when a heat exchange plate 9 is not disposed, the glue blocking strip 5 may be disposed between the bottom plate 711 and the pouch cell 1.

In the foregoing technical solution, the provided glue blocking strip 5 can prevent the structural adhesive from overflowing into the space between adjacent pouch cells 1, reducing the probability of a local hard structure being formed between adjacent pouch cells 1 due to adhesive overflow. As a result, this configuration can alleviate the problem of local stress concentration between adjacent pouch cells 1 and decrease the risk of damage to the pouch cells 1.

For example, the glue blocking strip 5 can avoid the region right below the bottom of the pouch cell 1, so that a heat conduction region can be formed between the bottom of the pouch cell 1 and the bottom plate 711.

In some embodiments, two adjacent pouch cells 1 share one glue blocking strip 5.

In the foregoing technical solution, by having two adjacent pouch cells 1 share one glue blocking strip 5, the number of glue blocking strips 5 to be arranged can be reduced, which is conducive to improving assembly efficiency.

In some embodiments, the glue blocking strip 5 is a glue blocking foam, and the glue blocking strip 5 is adhesively bonded to the bottom plate 711; or the glue blocking strip 5 is an adhesive strip with adhesive on one side, the glue blocking strip 5 is adhesively bonded to a bottom of the pouch cell 1.

In the foregoing technical solution, the glue blocking foam has good compressibility. When the pouch cells 1 squeeze the glue blocking strip 5, the glue blocking foam can better prevent the structural adhesive from overflowing between adjacent pouch cells 1. Additionally, the glue blocking strip 5 is adhesively bonded to the bottom plate 711, which facilitates the installation and fixation of the glue blocking strip 5; or the glue blocking strip 5 is configured as an adhesive strip with adhesive on one side, which is convenient to adhesively bond the glue blocking strip 5 to the bottom of the pouch cell 1, enabling the glue blocking strip 5 and the pouch cell 1 to be fixed as a whole. Thus, this configuration helps to improve the overall assembly efficiency of the battery apparatus 100.

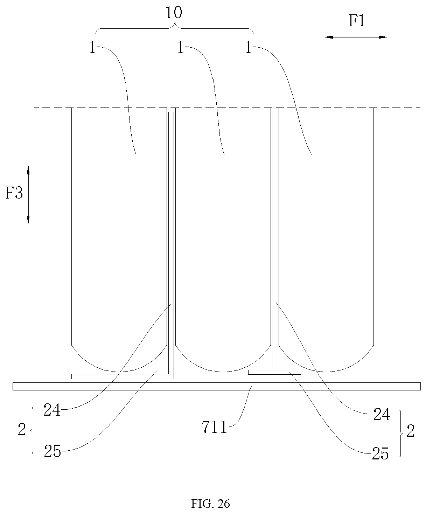

In some embodiments, referring to FIG. 26, the reinforcing partition 2 is in an inverted T-shaped or L-shaped structure and includes a first part 24 located between adjacent pouch cells 1 and a second part 25 located below the pouch cells 1, the second part 25 being located between a bottom of the pouch cells 1 and the bottom plate 711. For example, the second part 25 may extend from a lower end of the first part 24 towards one side of the pouch cell 1 along the thickness direction of the pouch cell 1, so that the reinforcing partition 2 is formed into an L-shaped structure (for example, the left reinforcing partition 2 as shown in FIG. 26). Alternatively, for another example, the second part 25 may alternatively extend from a lower end of the first part 24 towards two sides of the pouch cell 1 along the thickness direction of the pouch cell 1, so that the reinforcing partition 2 is formed into an inverted T-shaped structure (for example, the right reinforcing partition 2 as shown in FIG. 26).

Thus, the second part 25 may be wrapped in structural adhesive, so that the bottom of the pouch cells 1, the second part 25, and the bottom plate 711 are fixed through the structural adhesive. In this way, the connection and heat transfer area between the reinforcing partition 3 and the box 20 can be increased, and the yield of rigid support can be improved. Moreover, when the reinforcing partition 3 is in an inverted T-shaped structure, the second part 25 can be separated between the bottoms of adjacent pouch cells 1 to form a fitting gap with the bottom plate 711, preventing the structural adhesive from overflowing between adjacent pouch cells 1. This reduces the probability of a local hard structure being formed between the adjacent pouch cells 1 due to adhesive overflow, thereby alleviating the problem of local stress concentration between adjacent pouch cells 1 and decreasing the risk of damage to the pouch cells 1.

For example, the second part 25 can avoid the region right below the bottom of the pouch cell 1 (for example, the reinforcing partition 2 one the right as shown in FIG. 26), so that a direct heat conduction region can be formed between the bottom of the pouch cell 1 and the bottom plate 711. Alternatively, the second part 25 can shield the region right below the bottom of the pouch cell 1 (for example, the reinforcing partition 2 on the left side as shown in FIG. 26), so that heat can be indirectly transferred between the bottom of the pouch cell 1 and the bottom plate 711 through the second part 25.

In some embodiments of this application, the pouch cell 1 is any one of a lithium iron phosphate battery cell, a ternary battery cell, and a solid-state battery cell.

The solid-state battery cell may include but is not limited to polymer solid-state battery cell, oxide solid-state battery cell, sulfide solid-state battery cell, halide solid-state battery cell, or the like. The solid-state battery cell may alternatively be a semi-solid-state battery cell or an all-solid-state battery cell.

In the foregoing technical solution, using the above-mentioned types of pouch cells 1 can provide more options for the design of the battery apparatus to meet different usage requirements. The pouch cell 1 being a lithium iron phosphate battery cell has advantages of high reliability, long cycle life, light weight, large capacity, and low internal resistance. The pouch cell being a ternary battery cell has advantages of high energy density and good electrochemical performance. The pouch cell being a solid-state battery cell has advantages of high energy density, high reliability, light weight, and good performance in high and low temperatures.

In some embodiments of this application, the pouch cell 1 is a lithium iron phosphate battery cell, and in a positive electrode material of the pouch cell 1, a ratio of a positive electrode active material, a binder, and a conductive agent is 96:(1-3):(1-3); or the pouch cell 1 is a ternary battery cell, and in a positive electrode material of the pouch cell 1, a ratio of a positive electrode active material, a binder, and a conductive agent is 96:(2-3):(1-2).

For example, the pouch cell 1 is a lithium iron phosphate battery cell. In a positive electrode material of the pouch cell 1, a ratio of a positive electrode active material, a binder, and a conductive agent is preferably LFP:PVDF:conductive carbon black=96:2:2, where LFP generally refers to LiFePO4.

For example, the pouch cell 1 is a ternary battery cell. In a positive electrode material of the pouch cell 1, a ratio of a positive electrode active material, a binder, and a conductive agent is preferably eighth-based LiNi0.8Co0.1Mn0.1O2, with the ratio preferably being 96:2.5:1.5.

In some embodiments, a positive electrode of the pouch cell 1 may be a positive electrode plate, the positive electrode plate may include a positive electrode current collector and a positive electrode film layer disposed on at least one surface of the positive electrode current collector, and the positive electrode film layer includes a positive electrode active material.

In an example, the positive electrode current collector includes two back-to-back surfaces along a thickness direction of the positive electrode current collector, and the positive electrode film layer is arranged on either or both of the two back-to-back surfaces of the positive electrode current collector.

In an example, the positive electrode current collector may be a metal foil or a composite current collector. For example, as the metal foil, the positive electrode current collector may use stainless steel, copper, aluminum, nickel, baked carbon electrode, carbon, nickel, titanium, and silver surface-treated aluminum or stainless steel. The composite current collector may include a polymer material matrix and a metal layer. The composite current collector may be formed by forming a metal material (aluminum, aluminum alloy, nickel, nickel alloy, titanium, titanium alloy, silver, silver alloy, or the like) on a polymer material matrix (for example, a matrix of polypropylene, polyethylene terephthalate, polybutylene terephthalate, polystyrene, or polyethylene).

In an example, when the pouch cell 1 in the embodiments of this application is a lithium-ion battery, the positive electrode active material may include at least one of the following materials: phosphates, layered transition metal oxides, and their respective modified compounds. Optionally, the positive electrode active material may include layered transition metal oxides and their respective modified compounds, which is beneficial for increasing the energy density of the pouch cell 1. However, this application is not limited to such materials, and may alternatively use other conventional well-known materials that can be used as positive electrode film layers for batteries. One of these positive electrode active materials may be used alone, or two or more of them may be used in combination.

Examples of the phosphates may include but are not limited to at least one of lithium iron phosphate (for example, LiFePO₄ (LFP for short)), a composite material of lithium iron phosphate and carbon, lithium manganese phosphate (for example, LiMnPO₄), a composite material of lithium manganese phosphate and carbon, lithium manganese iron phosphate, and a composite material of lithium manganese iron phosphate and carbon.

Layered transition metal oxides include at least one of compounds with the general formula LiₐNi_{b}Co_{c}M_{d}OₑA_{f} and their modified compounds, where 0.8≤a≤1.2, 0.3≤b<1, 0<c<1, 0<d<1, 1≤e≤2, 0≤f≤1, M includes at least one of Mn, Al, Zr, Zn, Cu, Cr, Mg, Fe, V, Ti, and B, and A includes at least one of N, F, S, and Cl, optionally, 0.5≤b<1, and further optionally, 0.75≤b≤0.98.

Examples of the layered transition metal oxides may include but is not limited to at least one of lithium cobalt oxide (for example, LiCoO₂), lithium nickel oxide (for example, LiNiO₂), lithium manganese oxide (for example, LiMnO₂ and LiMn₂O₄), lithium nickel cobalt oxide, lithium manganese cobalt oxide, lithium nickel manganese oxide, lithium nickel cobalt manganese oxide (for example, LiNi_{1/3}Co_{1/3}Mn_{1/3}O₂ (NCM₃₃₃ for short), LiNi_{0.5}Co_{0.2}Mn_{0.3}O₂ (NCM₅₂₃ for short), LiNi_{0.5}Co_{0.25}Mn_{0.25}O₂ (NCM₂₁₁ for short), LiNi_{0.6}Co_{0.2}Mn_{0.2}O₂ (NCM₆₂₂ for short), LiNi_{0.8}Co_{0.1}Mn_{0.1}O₂ (NCM₈₁₁ for short)), LiNi_{0.9}Co_{0.05}Mn_{0.05}O₂ (Ni90 for short), lithium nickel cobalt aluminum oxide (for example, LiNi_{0.80}Co_{0.15}Al_{0.05}O₂), and their modified compounds thereof.

When the pouch cell 1 in the embodiments of this application is a sodium-ion battery, the positive electrode active material may include but is not limited to at least one of sodium-containing transition metal oxide, a poly-anionic material (for example, phosphate, fluorophosphate, pyrophosphate, and sulfate), and a Prussian blue-type material.

For example, the positive electrode active material for sodium-ion batteries may include at least one of NaFeO₂, NaCoO₂, NaCrO₂, NaMnO₂, NaNiO₂, NaNi_{1/2}Ti_{1/2}O₂, NaNi_{1/2}Mn_{1/2}O₂, Na_{2/3}Fe_{1/3}Mn_{2/3}O₂, NaNi_{1/3}Co_{1/3}Mn_{1/3}O₂, NaFePO₄, NaMnPO₄, NaCoPO₄, a Prussian blue-type material, and a material with a general formula XₚM'_{q}(PO₄)ᵣOₓY₃₋ₓ. In the general formula XₚM'_{q}(PO₄)ᵣOₓY₃₋ₓ, 0<p≤ 4, 0<q≤2, 1≤r≤3, 0≤x≤2, X is at least one of H+, Li+, Na+, K+, and NH4+, M' is a transition metal cation and optionally at least one of V, Ti, Mn, Fe, Co, Ni, Cu, and Zn, and Y is a halogen anion and optionally at least one of F, Cl, and Br.

In the embodiments of this application, the modified compounds of the above-mentioned positive electrode active materials may be obtained by doping modification and/or surface coating modification of the positive electrode active materials, such as carbon coating modification and fast ion conductor coating modification.

During the charge and discharge of the pouch cell 1, active ions such as Li are intercalated, de-intercalated, and consumed. The molar content of Li in the pouch cell 1 is different when the pouch cell 1 is discharged to different states. In the embodiments of this application, regarding the examples of the positive electrode active material, the molar content of Li refers to the initial state of the material, that is, before feeding of materials. When a positive electrode active material is applied in a battery system, the molar content of Li may change after charge-discharge cycles.

In the embodiments of this application, regarding the examples of the positive electrode active material, the molar content of oxygen O is only a theoretical state value. The release of oxygen from the crystal lattice will cause a change in the molar content of oxygen O. In reality, the molar content of oxygen O will fluctuate.

In the embodiments of this application, the content of elements in the positive electrode active material has the meaning well-known in the art and can be detected using equipment and methods well-known in the art. For example, referring to EPA 6010D-2014, the test can be carried out by inductively coupled plasma atomic emission spectrometry, and the determination can be performed using plasma atomic emission (ICP-OES, instrument model: Thermo ICAP7400). 0.4 g of positive electrode active material is weighed first, into which 10 ml of aqua regia (50% concentration) is added. Then the resulting product is placed on a 180°C flat plate for 30 mins. After digestion on the flat plate, the solution volume is adjusted to 100 mL, and quantitative testing is performed using the standard curve method.

In some embodiments, a foamed metal may be used as the positive electrode. The foamed metal may be foamed nickel, foamed copper, foamed aluminum, foamed alloy, foamed carbon, and the like. When the foamed metal is used as the positive electrode, a surface of the foamed metal may not have a positive electrode film layer disposed, or may have a positive electrode film layer disposed. In an example, the foamed metal may also be filled and/or deposited with a lithium source material, potassium metal, or sodium metal, where the lithium source material may be a lithium metal and/or lithium-rich material.

In some embodiments, the positive electrode film layer further optionally includes a positive electrode conductive agent. The positive electrode conductive agent is not limited to any particular type in the embodiments of this application. For example, the positive electrode conductive agent includes at least one of superconducting carbon, conductive graphite, acetylene black, carbon black, Ketjen black, carbon dots, carbon nanotubes, graphene, and carbon nanofiber. In some embodiments, a mass percentage of the positive electrode conductive agent in the positive electrode film layer is ≤5wt%.

In some embodiments, the positive electrode film layer further optionally includes a positive electrode binder. The positive electrode binder is not limited to any particular type in the embodiments of this application. For example, the positive electrode binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin. In some embodiments, a mass percentage of the positive electrode binder in the positive electrode film layer is ≤5wt%.

The positive electrode film layer is typically formed by applying a positive electrode slurry onto the positive electrode current collector, followed by drying and cold pressing. The positive electrode slurry is typically formed by dispersing the positive electrode active material, the optional conductive agent, the optional binder, and any other components in a solvent and stirring them to uniformity. The solvent may be N-methylpyrrolidone (NMP), but is not limited thereto.

In some embodiments, the negative electrode may be a negative electrode plate, and the negative electrode plate includes a negative electrode current collector and a negative electrode film layer disposed on at least one surface of the negative electrode current collector, where the negative electrode film layer includes a negative electrode active material.

For example, the negative electrode current collector includes two opposite surfaces in its thickness direction, and the negative electrode film layer is disposed on either or both of the two opposite surfaces of the negative electrode current collector.

In an example, the negative electrode current collector may be a metal foil, a foamed metal, or a composite current collector. For example, as the metal foil, the negative electrode current collector may use silver surface-treated aluminum or stainless steel, copper, aluminum, nickel, baked carbon electrode, carbon, nickel, or titanium. The foamed metal may be foamed nickel, foamed copper, foamed aluminum, foamed alloy, foamed carbon, and the like. The composite current collector may include a polymer material matrix and a metal layer. The composite current collector may be formed by forming a metal material (copper, copper alloy, nickel, nickel alloy, titanium, titanium alloy, silver, silver alloy, or the like) on a polymer material matrix (for example, a matrix of polypropylene, polyethylene terephthalate, polybutylene terephthalate, polystyrene, or polyethylene).

In an example, the negative electrode active material may be a negative electrode active material for pouch cells well-known in the art. In an example, the negative electrode active material may include at least one of the following materials: a carbon material (for example, the carbon material includes at least one of artificial graphite, natural graphite, soft carbon, and hard carbon), a silicon-based material, a tin-based material, and lithium titanate. The silicon-based material may include at least one of elemental silicon, silicon-oxygen compound, silicon-carbon composite, silicon-nitrogen composite, and silicon alloy. The tin-based material may include at least one of elemental tin, tin-oxygen compound, and tin alloy. However, this application is not limited to such materials, and may alternatively use other conventional well-known materials that can be used as negative electrode film layers for batteries. One of these negative electrode film layers may be used alone, or two or more of them may be used in combination.

In some embodiments, the negative electrode active material includes element silicon, where the element silicon can exist in the form of silicon-based materials. The silicon-based material may include at least one of elemental silicon, silicon-oxygen compound, silicon-carbon composite, silicon-nitrogen composite, and silicon alloy. The introduction of element silicon can increase the energy density of pouch cells.

In some embodiments, the mass percentage of the element silicon in the negative electrode film layer is from 1wt% to 32wt%, optionally from 2wt% to 19wt%, and further optionally, from 6wt% to 13wt%. In the pouch cell 1 system, when the mass percentage of the element silicon falls within the foregoing range, the energy density of the pouch cell 1 can be increased.

In the embodiments of this application, the mass percentage of element silicon in the negative electrode film layer has the meaning well-known in the art and can be detected using equipment and methods well-known in the art. For example, the negative electrode plate is soaked in a solvent such as water to separate the negative electrode active material from the negative electrode current collector. Then, the negative electrode active material can be obtained through suction filtration. Determination is performed for the negative electrode active material using an inductively coupled plasma-optical emission spectrometer of model ICAP7400 from Thermo Fisher Scientific in the United States and in accordance with the standard GB/T 30902-2014, to obtain the percentage of element silicon.

In some embodiments, the negative electrode film layer further optionally includes a negative electrode conductive agent. The negative electrode conductive agent is not limited to any particular type in the embodiments of this application. For example, the negative electrode conductive agent may include at least one of superconducting carbon, conductive graphite, acetylene black, carbon black, Ketjen black, carbon dots, carbon nanotubes, graphene, and carbon nanofiber. In some embodiments, a mass percentage of the negative electrode conductive agent in the negative electrode film layer is ≤5wt%.

In some embodiments, the negative electrode film layer further optionally includes a negative electrode binder. The negative electrode binder is not limited to any particular type in the embodiments of this application. In an example, the negative electrode binder may include at least one of styrene-butadiene rubber (SBR), water soluble unsaturated resin SR-1B, water-based acrylic resin (for example, polyacrylic acid PAA), polymethacrylic acid PMAA, polyacrylic acid sodium PAAS), polyacrylamide (PAM), polyvinyl alcohol (PVA), sodium alginate (SA), and carboxymethyl chitosan (CMCS). In some embodiments, a mass percentage of the negative electrode binder in the negative electrode film layer is ≤5%.

In some embodiments, the negative electrode film layer further optionally includes another additive. For example, the another additive may include a thickener, for example, sodium carboxymethyl cellulose (CMC-Na) or PTC thermistor material. In some embodiments, a mass percentage of another additive in the negative electrode film layer is ≤2wt%.

In some embodiments, the material of the positive electrode current collector may be aluminum, and the material of the negative electrode current collector may be copper.

In some embodiments, a separator element includes a separator. The separator is not limited to any particular type in this application and may be any well-known porous separator with good chemical stability and mechanical stability.

The separator is not limited to any particular type in the embodiments of this application and may be any well-known porous separator with good chemical stability and mechanical stability.

In some embodiments, the material of the separator may include one or more of glass fiber, non-woven fabric, polyethylene, polypropylene, and polyvinylidene fluoride. The separator may be a single-layer film or may be a multi-layer composite film and is not particularly limited. When the separator is a multi-layer composite film, all layers may be made of the same or different materials, which is not particularly limited.

In some embodiments, the separator may include a porous base film and a coating disposed on at least one side of the porous base film, where the coating may include at least one of inorganic particles and organic particles.

The porous base film may include one or more of polyethylene and polypropylene.

The inorganic particles have good heat resistance performance, which can improve the overall heat resistance performance of the separator. The inorganic particles, within the operating voltage range of sodium-ion batteries, hardly undergo oxidation and reduction reactions with metal dendrites at all. In other words, the inorganic particles are configured not to undergo oxidation or reduction reactions with alkali metals and/or alkaline earth metals under the nominal voltage of sodium-ion batteries.

In some embodiments, the inorganic particles include one or more of boehmite γ-AlOOH, aluminum oxide Al₂O₃, aluminum hydroxide Al(OH)₃, barium sulfate BaSO₄, magnesium oxide MgO, magnesium hydroxide Mg(OH)₂, calcium oxide CaO, cerium oxide CeO₂, strontium titanate SrTiO₃, barium titanate BaTiO₃, and magnesium fluoride MgF₂.

In some embodiments, the organic particles include at least one of polystyrene, polyethylene, polyimide, melamine resin, phenolic resin, polypropylene, polyester (for example, polyethylene terephthalate, polyethylene naphthalate, polybutylene terephthalate), polyphenylene sulfide, polyaramid, polyamideimide, polyimide, copolymer of butyl acrylate and ethyl methacrylate, and a combination thereof.

In some embodiments, the pouch cell 1 further includes an electrolyte.

During charge and discharge of the battery cell, active ions are intercalated and deintercalated between the positive electrode plate and the negative electrode plate, and the electrolyte conducts the active ions between the positive electrode plate and the negative electrode plate. The electrolyte is not specifically limited to any particular type in the embodiments of this application, and may be selected depending on actual needs.

The electrolyte includes an electrolytic salt and a solvent. The electrolytic salt and the solvent are not limited to any specific types, and may be selected based on actual needs.

In some embodiments, the electrolyte further optionally includes an additive. For example, the additive may include a negative electrode film-forming additive, or may include a positive electrode film-forming additive, or may include an additive that can improve some performance of a battery, for example, an additive for improving over-charge performance of the battery, an additive for improving high-temperature performance of the battery, and an additive for improving low-temperature power performance of the battery.

For example, the additive includes at least one of cyclic carbonate compound containing unsaturated bonds, sulfate compound, sulfite compound, sultone compound, disulfonic compound, nitrile compound, aromatic compound, isocyanate compound, phosphonitrile compound, anhydride, cyclic anhydride compound, phosphite ester compound, phosphate ester compound, borate, and carboxylic ester compound.

It can be understood that when the pouch cell 1 is a lithium iron phosphate battery cell, in a positive electrode material of the pouch cell 1, a positive electrode active material accounts for 96 parts of the total weight of the positive electrode material, a binder accounts for 1 part to 3 parts of the total weight of the positive electrode material (for example, the value may include but is not limited to 1, 1.2, 1.5, 1.8, 2, 2.2, 2.5, 2.8, or 3), and a conductive agent accounts for 1 part to 2 parts of the total weight of the positive electrode material (for example, the value may include but is not limited to 1, 1.2, 1.5, 1.8, 2, 2.2, 2.5, 2.8, or 3).

For example, when the pouch cell 1 is a lithium iron phosphate battery cell, a positive electrode active material is LFP (which may refer to LiFePO₄, that is, lithium iron phosphate), a binder may be PVDF (polyvinylidene fluoride), and a conductive agent may be conductive carbon black, where the ratio LFP:PVDF:conductive carbon black may be 96:2:2, meaning a total weight of the positive electrode active material is divided into 100 parts, with LFP accounting for 96 parts, PVDF accounting for 2 parts, and conductive carbon black accounting for 2 parts. The unit of weight for the positive electrode active material may be gram.

When the pouch cell 1 is a ternary battery cell, in a positive electrode material of the pouch cell 1, a positive electrode active material accounts for 96 parts of the total weight of the positive electrode material, a binder accounts for 2 parts to 3 parts of the total weight of the positive electrode material (for example, the value may include but is not limited to 2, 2.2, 2.5, 2.8, or 3), and a conductive agent accounts for 1 part to 2 parts of the total weight of the positive electrode material (for example, the value may include but is not limited to 1, 1.2, 1.5, 1.8, or 2). The ternary battery cell may include but is not limited to a lithium nickel cobalt manganese system, a lithium nickel cobalt aluminum system, or the like.

For example, the ternary material of the ternary battery cell may be eighth-based LiNi_{0.8}Co_{0.1}Mn_{0.1}O₂, where a ratio of weight parts of the positive electrode active material, binder, and conductive agent is 96:2.5:1.5, meaning a total weight of the positive electrode material is divided into 100 parts, with eighth-based LiNi_{0.8}Co_{0.1}Mn_{0.1}O₂ accounting for 96 parts, the binder accounting for 2.5 parts, and the conductive agent accounting for 1.5 parts.

In the foregoing technical solution, when the pouch cell 1 is a lithium iron phosphate battery cell, a high proportion of the positive electrode active material means that more substances capable of undergoing an electrochemical reaction can be accommodated within a limited electrode assembly. This is conducive to increasing the capacity and energy density of the battery apparatus 100, enabling the lithium iron phosphate battery cell to output a higher amount of electricity when its volume and weight are relatively small, and meeting the application scenarios with certain requirements for energy density. Using the above-mentioned ranges for the amounts of the binder and the conductive agent can reduce the cost of auxiliary materials, thereby reducing the overall cost of the battery apparatus 100. When the pouch cell 1 is a ternary battery cell, due to the relatively complex structure and surface properties of the ternary material itself, using the positive electrode active material, binder, and conductive agent in the above-mentioned dosage ratios is conducive to ensuring good adhesion between the positive electrode active material particles and between the active material and the current collector. This improves the mechanical stability and integrity of the electrode assembly, and helps to reduce the risk of active material shedding and electrode pulverization during charge and discharge, and prolong the cycle life of the battery apparatus 100.

The other constitutions and operations of the battery apparatus 100 in this embodiment are known to those skilled in the art and will not be described in detail herein.

According to a second aspect, an embodiment of this application further provides an electric apparatus including the battery apparatus 100 according to any one of the foregoing solutions.

In the foregoing technical solution, since the performance of the battery apparatus 100 is improved, it is conducive to enhancing the operational power consumption performance of the electric apparatus.

The following is a description of the battery apparatus 100 according to a specific embodiment of this application.

The battery apparatus 100 includes a cell array 10 and a box 20, where the cell array 10 is provided within the box 20, a length direction of the box 20 is a first direction F1, a width direction of the box 20 is a second direction F2, and a height direction of the box 20 is a third direction F3.

The box 20 is provided with two battery modules 101 arranged in the second direction F2, each battery module 101 includes two cell arrays 10 arranged in the first direction F1, each cell array 10 includes a plurality of pouch cells 1 arranged in the first direction F1, with a length direction of the pouch cell 1 extending along the second direction F2, and a width direction of the pouch cell 1 extending along the third direction F3, where the first direction F1 is a thickness direction of the pouch cell 1.

The cell array 10 further includes a reinforcing partition 2 and a buffer element 3, and the reinforcing partition 2 and the buffer element 3 are alternately arranged along the first direction F1. The length direction of the reinforcing partition 2 is consistent with the length direction of the pouch cell 1, the width direction of the reinforcing partition 2 is consistent with the width direction of the pouch cell 1, the length direction of the buffer element 3 is consistent with the length direction of the pouch cell 1, and the width direction of the buffer element 3 is consistent with the width direction of the pouch cell 1.

The reinforcing partition 2 is an aluminum plate and is adhered to the pouch cell 1 through double-sided adhesive. The reinforcing partition 2 is sandwiched between two adjacent pouch cells 1, and the number of reinforcing partitions 2 sandwiched between two adjacent pouch cells 1 is only one, so that two adjacent pouch cells 1 share the stiffness of the reinforcing partition 2. A buffer element 3 is sandwiched between two adjacent pouch cells 1, and the buffer element 3 sandwiched between two adjacent pouch cells 1 is provided in one, so that the two adjacent pouch cells 1 share the expansion space the buffer element 3 provides.

A bottom of the pouch cell 1 and a bottom plate 711 of the box 20 are connected together through structural adhesive, which can ensure the stiffness of the connection below. The reinforcing partition 2 is fixedly connected to an upper end of a mounting bracket 8 through a connecting portion 23, and the mounting bracket 8 and a box body 7 are mechanically connected (through, for example, screwing, riveting, or welding), which can ensure the stiffness of the connection above. Adjacent pouch cells 1 are connected through a conductive element 12, and the conductive element 12 and the connecting portions 23 are arranged in the third direction F3, so as to fully utilize the space in the third direction F3 and reduce space occupied in other regions. In this way, the rigidity of the pouch cell 1 in the length, width, and thickness directions is enhanced, and the reliability of the battery apparatus 100 is improved.

It should be noted that, without conflict, the embodiments and features in the embodiments in this application may be combined with each other.

The foregoing descriptions are merely preferred embodiments of this application which are not intended to limit this application. Persons skilled in the art understand that this application may have various modifications and variations. Any modifications, equivalent replacements, and improvements made without departing from the spirit and principle of this application shall fall within the protection scope of this application.

## Claims

1. A battery apparatus, comprising:
a box; and
a cell array, adhesively disposed within the box, wherein the cell array comprises a plurality of pouch cells stacked along a thickness direction; wherein
a reinforcing partition is provided between large surfaces of at least two adjacent pouch cells in the cell array, the reinforcing partition is connected to the box, stiffness of the reinforcing partition is greater than stiffness of a pouch shell of the pouch cell, and the reinforcing partition exchanges heat with the pouch cell.

2. The battery apparatus according to claim 1, wherein the battery apparatus comprises the box for loading the cell array, an edge of the reinforcing partition has a connecting portion protruding from the pouch cell, and the connecting portion is configured to form a connection with the box.

3. The battery apparatus according to claim 2, wherein the box comprises a box body and a mounting bracket, wherein the mounting bracket is installed within the box body, and the connecting portion is connected to the mounting bracket.

4. The battery apparatus according to claim 3, wherein the pouch cells in the cell array are arranged along a thickness direction of the pouch cell, a width direction of the pouch cell is a vertical direction, a length direction of the pouch cell is a horizontal direction, and the mounting bracket is disposed on one side of the pouch cell along the length direction of the pouch cell.

5. The battery apparatus according to claim 4, wherein an upper end of the mounting bracket is lower than an upper end of the pouch cell so as to form an upper clearance space above the mounting bracket, and the connecting portion is connected to the mounting bracket at a position below the upper clearance space.

6. The battery apparatus according to claim 4 or 5, wherein the connecting portion is connected to an upper portion of the mounting bracket, and a lower end of the connecting portion is higher than a lower end of the mounting bracket so as to form a lower clearance space below the connecting portion; and the pouch cell has a conductive element electrically connected to an electrode assembly of the pouch cell, wherein at least part of the conductive element is exposed outside the pouch shell and located in the lower clearance space.

7. The battery apparatus according to any one of claims 3 to 6, wherein one mounting bracket is connected to at least two connecting portions.

8. The battery apparatus according to claim 7, wherein the mounting bracket comprises a plurality of sidewalls spaced apart from each other along an arrangement direction of the pouch cells in the cell array, wherein each sidewall corresponds to one connecting portion, and the connecting portion is connected to the sidewall.

9. The battery apparatus according to claim 7, wherein the mounting bracket is provided in plurality, the plurality of mounting brackets are arranged along an arrangement direction of the pouch cells in the cell array, each mounting bracket comprises two sidewalls and a connecting wall connecting the two sidewalls, and adjacent sidewalls of two adjacent mounting brackets together clamp the same connecting portion.

10. The battery apparatus according to any one of claims 3 to 9, wherein one of the length direction and width direction of the box is a first direction, the other is a second direction, a height direction of the box is a third direction, the pouch cells in the cell array are arranged along the first direction, the first direction is the thickness direction of the pouch cell, the second direction is the length direction of the pouch cell, the third direction is the width direction of the pouch cell, and the mounting bracket is provided at each of two ends of the box in the second direction.

11. The battery apparatus according to claim 10, wherein a plurality of mounting brackets arranged along the first direction are provided at each end of the box in the second direction.

12. The battery apparatus according to claim 10 or 11, wherein the box is provided with a battery module, wherein the battery module comprises two cell arrays arranged along the second direction, all the pouch cells in each cell array are stacked in sequence along the thickness direction of the pouch cell, and ends of the two cell arrays in the same battery module that are far away from each other in the second direction are respectively connected to the mounting brackets on the corresponding sides.

13. The battery apparatus according to claim 12, wherein a length direction of the reinforcing partition extends along the second direction, two ends of the reinforcing partition in the length direction of the reinforcing partition respectively extend to two ends of the battery module in the second direction, so that the two cell arrays in the battery module share the reinforcing partition, and the two ends of the reinforcing partition in the length direction of the reinforcing partition are respectively connected to the mounting brackets at the two ends of the box in the second direction.

14. The battery apparatus according to any one of claims 1 to 13, wherein the battery apparatus comprises the box for loading the cell array, the box comprises cover plates disposed on two sides of the cell array along the height direction of the box, the cover plates on the two sides being a top plate and a bottom plate, and the box further comprises a heat exchange plate, the heat exchange plate being disposed between the cell array and the cover plate and configured to exchange heat with the cell array.

15. The battery apparatus according to claim 14, wherein the width direction of the pouch cell is consistent with the height direction of the box, and a surface of the pouch shell along the width direction of the pouch cell facing the heat exchange plate is a flat surface and connected to the heat exchange plate through a heat-conducting medium.

16. The battery apparatus according to any one of claims 3 to 13, wherein the battery apparatus comprises the box for loading the cell array, the box comprises cover plates disposed on two sides of the cell array along the height direction of the box, the cover plates on the two sides being a top plate and a bottom plate, and the box further comprises a heat exchange plate, the heat exchange plate being disposed between the cell array and the bottom plate and configured to exchange heat with the cell array, and the mounting bracket being disposed on a top of the heat exchange plate.

17. The battery apparatus according to any one of claims 1 to 16, wherein a thickness of the reinforcing partition is less than a thickness of the pouch cell.

18. The battery apparatus according to claim 17, wherein the thickness of the reinforcing partition is 0.8 mm to 2.0 mm.

19. The battery apparatus according to any one of claims 1 to 18, wherein the reinforcing partition is a metal plate.

20. The battery apparatus according to claim 19, wherein the reinforcing partition is an aluminum plate, an aluminum alloy plate, a copper plate, or a steel plate.

21. The battery apparatus according to any one of claims 1 to 20, wherein the reinforcing partition is a solid structure.

22. The battery apparatus according to any one of claims 1 to 20, wherein the reinforcing partition has a cavity formed inside.

23. The battery apparatus according to claim 22, wherein the cavity comprises a heat exchange flow channel for accommodating a heat exchange medium.

24. The battery apparatus according to claim 23, wherein the heat exchange flow channel penetrates from one end of the reinforcing partition to the other end in a length direction of the reinforcing partition.

25. The battery apparatus according to any one of claims 22 to 24, wherein a reinforcing rib is provided inside the cavity.

26. The battery apparatus according to any one of claims 1 to 25, wherein the length direction of the reinforcing partition extends along the length direction of the pouch cell, wherein a length of the reinforcing partition is greater than 80% of a length of the pouch cells; and/or a width of the reinforcing partition is greater than 80% of a width of the pouch cell.

27. The battery apparatus according to claim 26, wherein a plurality of adjacent cell arrays arranged along the length direction of the pouch cell share the reinforcing partition.

28. The battery apparatus according to claim 27, wherein the length of the reinforcing partition is greater than twice the length of the pouch cell, so that two adjacent cell arrays arranged along the length direction of the pouch cell share the reinforcing partition.

29. The battery apparatus according to claim 26, wherein the width of the reinforcing partition is less than the width of the pouch cell.

30. The battery apparatus according to any one of claims 1 to 29, wherein the reinforcing partition is adhesively connected to the pouch cell.

31. The battery apparatus according to claim 30, wherein the reinforcing partition is adhesively fixed to the pouch cell through double-sided adhesive.

32. The battery apparatus according to any one of claims 1 to 31, wherein the cell array comprises a plurality of reinforcing partitions arranged along the thickness direction of the pouch cell, and two reinforcing partitions arranged adjacent to each other along the thickness direction of the pouch cell and respectively disposed on two sides of at least one pouch cell along the thickness direction of the pouch cell are connected through a connecting plate located in a peripheral region of the pouch cell.

33. The battery apparatus according to claim 32, wherein the connecting plate is disposed between the two reinforcing partitions the connecting plate connects and integrally connected with the two reinforcing partitions into a U-shaped shell.

34. The battery apparatus according to any one of claims 1 to 33, wherein the reinforcing partition is sandwiched between every two adjacent pouch cells in the cell array.

35. The battery apparatus according to any one of claims 1 to 33, wherein a plurality of pouch cells are sandwiched between two adjacent reinforcing partitions in the cell array.

36. The battery apparatus according to claim 35, wherein the number of pouch cells sandwiched between two adjacent reinforcing partitions in the cell array is less than or equal to four.

37. The battery apparatus according to any one of claims 1 to 36, wherein a buffer element is sandwiched between at least two adjacent pouch cells in the cell array, stiffness of the buffer element being less than stiffness of the pouch shell.

38. The battery apparatus according to claim 37, wherein both the buffer element and the reinforcing partition are disposed between at least two adjacent pouch cells in the cell array.

39. The battery apparatus according to claim 38, wherein the buffer element is sandwiched between two adjacent reinforcing partitions to form a partition group, the partition group being disposed between two adjacent pouch cells.

40. The battery apparatus according to claim 37, wherein at most one of the buffer element and the reinforcing partition is disposed between any two adjacent pouch cells in the cell array.

41. The battery apparatus according to claim 37, wherein at least one pouch cell in the cell array is sandwiched between the buffer element and the reinforcing partition.

42. The battery apparatus according to claim 41, wherein the buffer elements and the reinforcing partitions in the cell array are alternately arranged.

43. The battery apparatus according to any one of claims 37 to 42, wherein the buffer element covers more than 80% of an area of a side surface of the pouch cell along the thickness direction of the pouch cell; and/or the buffer element is a foam layer or a silicone layer.

44. The battery apparatus according to any one of claims 1 to 36, wherein a buffer element is disposed at each of two ends of the cell array along the thickness direction of the pouch cell, stiffness of the buffer element is less than stiffness of the pouch shell, and all the pouch cells in the cell array are sandwiched between the buffer elements at the two ends.

45. The battery apparatus according to any one of claims 1 to 44, wherein the pouch cell comprises a conductive element, wherein the conductive element is electrically connected to the electrode assembly of the pouch cell, and at least part of the conductive element is exposed outside the pouch shell; and two adjacent pouch cells in the cell array are connected through the conductive element.

46. The battery apparatus according to claim 45, wherein the two conductive elements forming the connection are lap jointed, and at least one conductive element is in a bent shape.

47. The battery apparatus according to claim 45, wherein the two conductive elements forming the connection are connected through a transition piece, and the transition piece is in a bent shape.

48. The battery apparatus according to any one of claims 45 to 47, wherein the conductive element is provided at each of two ends of the pouch cell along the length direction of the pouch cell, and the conductive elements at adjacent ends of two adjacent pouch cells along the length direction of the pouch cell are connected.

49. The battery apparatus according to claim 48, wherein the two conductive elements the at two ends of the pouch cell along the length direction of the pouch cell have opposite polarities, and the two conductive elements forming the connection have the same or opposite polarities.

50. The battery apparatus according to claim 48 or 49, wherein the cell array comprises at least three pouch cells, and in two conductive elements of two adjacent pouch cells in the cell array that are respectively located between the two adjacent pouch cells, one conductive element is connected to the conductive element on the corresponding side of one adjacent pouch cell, and the other conductive element is connected to the conductive element on the corresponding side of another adjacent pouch cell.

51. The battery apparatus according to claim 48 or 49, wherein the battery apparatus comprises the box for loading the cell array, the box is provided with a battery module, and the battery module comprises two cell arrays arranged along the length direction of the pouch cell, wherein all the pouch cells in each cell array are stacked in sequence along the thickness direction of the pouch cell; and the conductive elements of the two cell arrays in the same battery module on sides of the two cell arrays close to each other along the length direction of the pouch cell are connected.

52. The battery apparatus according to any one of claims 48 to 51, wherein the battery apparatus comprises the box for loading the cell array, an edge of the reinforcing partition has a connecting portion protruding from the pouch cell along the length direction of the pouch cell, and the connecting portion is configured to form a connection with the box and spaced apart from the conductive element along the width direction of the pouch cell.

53. The battery apparatus according to any one of claims 1 to 52, wherein the pouch shell comprises two membrane portions arranged and connected along the thickness direction of the pouch cell, wherein the two membrane portions each define an accommodating groove, the accommodating grooves of the two membrane portions open towards each other along the thickness direction of the pouch cell and together form an accommodating cavity of the pouch shell, and the electrode assembly of the pouch cell is disposed in the accommodating cavity.

54. The battery apparatus according to claim 53, wherein a wall thickness of the membrane portion is less than or equal to 0.2 mm, a size of the pouch cell along the thickness direction of the pouch cell is a first size, a size of the membrane portion along the thickness direction of the pouch cell is a second size, a ratio of the second size to the first size is greater than or equal to 0.4 and less than or equal to 0.6, and the first size is greater than or equal to 5 mm and less than or equal to 70 mm.

55. The battery apparatus according to claim 53 or 54, wherein the two membrane portions are separate elements and each have edge sealing structures on all around of the pouch cell.

56. The battery apparatus according to claim 53 or 54, wherein the two membrane portions are integrated elements and each have edge sealing structures on one long side and two short sides of the pouch cell.

57. The battery apparatus according to any one of claims 1 to 56, wherein the battery apparatus comprises the box for loading the cell array, the box comprises a top plate and a bottom plate that are disposed on two sides of the cell array along a height direction of the box, the width direction of the pouch cell is consistent with the height direction of the box, and structural adhesive is filled between the cell array and the bottom plate.

58. The battery apparatus according to claim 57, wherein the structural adhesive is a heat-conducting adhesive.

59. The battery apparatus according to claim 58, wherein the box is provided with a glue blocking strip, the bottom plate is located below the cell array, a fitting gap is formed between bottoms of two adjacent pouch cells arranged along the thickness direction of the pouch cell, and the glue blocking strip is located between the fitting gap and the bottom plate.

60. The battery apparatus according to claim 59, wherein two adjacent pouch cells share one glue blocking strip.

61. The battery apparatus according to claim 60, wherein the glue blocking strip is a glue blocking foam, and the glue blocking strip is adhesively bonded to the bottom plate; or the glue blocking strip is an adhesive strip with adhesive on one side, the glue blocking strip is adhesively bonded to a bottom of the pouch cell.

62. The battery apparatus according to claim 60, wherein the reinforcing partition is in an inverted T-shaped or L-shaped structure and comprises a first part located between adjacent pouch cells and a second part located below the pouch cells, the second part being located between a bottom of the pouch cells and the bottom plate.

63. The battery apparatus according to any one of claims 1 to 62, wherein the pouch cell is any one of a lithium iron phosphate battery cell, a ternary battery cell, and a solid-state battery cell.

64. The battery apparatus according to claim 63, wherein the pouch cell is a lithium iron phosphate battery cell, and in a positive electrode material of the pouch cell, a ratio of a positive electrode active material, a binder, and a conductive agent is 96:(1-3):(1-3); or the pouch cell is a ternary battery cell, and in a positive electrode material of the pouch cell, a ratio of a positive electrode active material, a binder, and a conductive agent is 96:(2-3):(1-2).

65. An electric apparatus, comprising the battery apparatus according to any one of claims 1 to 64.
